# EUROPEAN PATENT APPLICATION

(11) **EP 4 261 791 A1**
(43) Date of publication of application: **18.10.2023**
(21) Application number: 23164427.9
(22) Date of filing: 27.03.2023
(51) Int. Cl.: G06V 10/24, G06V 10/82, G06V 20/52, G06V 10/70

(54) **INFORMATION PROCESSING SYSTEM**

(30) Priority: 13.04.2022 JP 2022066626
(71) Applicant: Marketvision Co.,Ltd., Tokyo 102-0075 (JP)
(72) Inventor: TANII, Akiyoshi, Tokyo, 1020075 (JP)
(74) Representative: Betten & Resch

(57) **Abstract**

An information processing system includes: a displayed goods recognition processing unit configured to recognize information indicating goods, the goods appearing in image information obtained by imaging a display shelf; and a verification target extraction processing unit configured to extract a recognition result to be a verification target out of the goods displayed on the display shelf, in which the verification target extraction processing unit extracts the verification target by using a change in the information indicating the goods displayed on the display shelf that has been recognized from the image information.

## Description

### CROSS REFERENCE TO RELATED APPLICATION

This nonprovisional application is based on Japanese Patent Application No. 2022-066626 filed with the Japan Patent Office on April.13, 2022, the entire contents of which are hereby incorporated by reference.

### FIELD

The present invention relates to an information processing system for extracting a recognition result having a high possibility of necessitating verification, with regard to the recognition result that has been recognized from image information.

### BACKGROUND AND SUMMARY

In various stores such as convenience stores and supermarkets, goods to be sold are generally placed on display shelves. Therefore, by displaying a plurality of goods on a display shelf, even though one of the goods is purchased, someone else is able to purchase identical goods. Then, it is important to manage where and how many goods are displayed on the display shelf from the viewpoint of sales strategy of the goods.

Therefore, in order to grasp an actual displayed situation of the goods in a store, there is a method for imaging the display shelf with an imaging device and automatically specifying displayed goods from image information obtained by imaging the goods. For example, there is a method for using an image recognition technology for an image obtained by imaging a display shelf in a store, based on a sample image of every one of the goods. As examples of these conventional techniques, JP H05-342230 A and JP H05-334409 A can be mentioned in the following.

The invention of JP H05-342230 A is a system that supports a person who does not have knowledge about on which display shelf goods should be displayed. Hence, it is possible to understand where the goods should be displayed, but it does not intend to specify the displayed goods. In addition, JP H05-334409 A is a system that supports inputs of images of goods, in a shelf allocation support system that supports displaying of the goods. However, the system of JP H05-334409 A only supports the inputs of the images of the goods when using the shelf allocation support system. Even though this system is used, it is not possible to grasp a specific displayed situation of the goods.

In addition, even though it is possible to specify the goods displayed on a display shelf from the image information of the goods, it is not possible to specify actual prices of the goods. In order to specify the actual prices of the goods, it is necessary to make a comparison with a POS system.

Furthermore, other than JP H05-342230 A and JP H05-334409 A, there is also another technique of identifying displayed goods from image information obtained by imaging a display shelf, by using an image recognition processing technology. This is advantageous in that it is possible to grasp the actual displayed situation in the store.

At present, however, even though the latest technology of image recognition processing is utilized, its recognition accuracy does not reach human recognition abilities. For example, as described above, in a case of determining whether the goods appear in image information obtained by imaging a display shelf of the goods so as to determine whether the goods as a determination target is displayed, it cannot be said that the recognition accuracy is high.

In addition, the conventional image recognition system is a system for determining which one of the images that have been registered beforehand is the most similar one, and thus compares higher or lower in a relative rank to specify an image having the highest rank as a first candidate. However, it is not clear whether a determination result of the image recognition system is correct, and an operation by a human to determine whether the first candidate of the image recognition system is correct or incorrect is needed in some cases.

In this manner, in the conventional image recognition systems, confirmation and correction operations are needed for recognition results by a human. Then, the confirmation and correction operations by a human become a bottleneck of labor saving in work, and its burden is significantly heavy.

In view of such circumstances, there is a demand for saving the labor of humans in the confirmation and correction operations for recognition results obtained by the image recognition processing.

In consideration of the above issues, the inventor of the present invention has invented an information processing system for extracting a recognition result having a high possibility of necessitating verification, with regard to the recognition result that has been recognized from image information.

According to a first aspect, an information processing system includes: a displayed goods recognition processing unit configured to recognize information indicating goods, the goods appearing in image information obtained by imaging a display shelf; and a verification target extraction processing unit configured to extract a recognition result to be a verification target out of the goods displayed on the display shelf, in which the verification target extraction processing unit extracts the verification target by using a change in the information indicating the goods displayed on the display shelf that has been recognized from the image information.

In the above-described configuration, the information processing system can be configured such that the verification target extraction processing unit compares either goods identification information or a goods type that has been recognized in current processing by the displayed goods recognition processing unit with either goods identification information or a goods type that has been recognized in processing before the current processing by the displayed goods recognition processing unit, and extracts the verification target.

The configuration as described above enables extraction of the recognition result having a high possibility of necessitating verification, with regard to the recognition result that has been recognized from the image information.

In the above-described configuration, the information processing system can be configured such that the verification target extraction processing unit compares either goods identification information or a goods type that has been recognized in current processing by the displayed goods recognition processing unit with either goods identification information or a goods type that has been recognized in processing before the current processing by the displayed goods recognition processing unit, and as a result of comparison, in a case where either pieces of the goods identification information or the goods types are not identical to each other, the verification target extraction processing unit extracts as the verification target.

The goods displayed on the display shelf are regularized to some extent, and there are not so many changes. Therefore, in a case where there is a change in the recognition result by the displayed goods recognition processing unit, there is a possibility of erroneous recognition. Therefore, it is desirably extracted as the verification target.

In the above-described configuration, the information processing system can be configured to further include: a product tag recognition processing unit configured to recognize product tag information from a product tag that appears in the image information; and a correspondence relationship determination processing unit configured to determine a correspondence relationship between a goods type of the goods displayed and the product tag, in which in a case where the verification target extraction processing unit compares either goods identification information or a goods type that has been recognized in current processing by the displayed goods recognition processing unit with either goods identification information or a goods type that has been recognized in processing before the current processing by the displayed goods recognition processing unit, and as a result of comparison, either pieces of the goods identification information or the goods types are identical to each other, and in a case where there is a change between a correspondence relationship between the goods type of the goods displayed and a product tag that has been determined in the current processing by the correspondence relationship determination processing unit and a correspondence relationship between the goods type of the goods displayed and a product tag that has been recognized in the processing before the current processing by the correspondence relationship determination processing unit, and there is a change between image information of a place area to be a processing target in the current processing and image information of a corresponding place area in the processing before the current processing, the verification target extraction processing unit extracts as the verification target.

Even though the recognition from the image information of the place area is identical, in a case where there are changes in the image information and in the correspondence relationship, there is a high possibility of erroneous recognition. Therefore, the place area is desirably extracted as the verification target.

In the above-described configuration, the information processing system can be configured to further include: a product tag recognition processing unit configured to recognize product tag information from a product tag that appears in the image information, in which in a case where the verification target extraction processing unit compares either goods identification information or a goods type that has been recognized in current processing by the displayed goods recognition processing unit with either goods identification information or a goods type that has been recognized in processing before the current processing by the displayed goods recognition processing unit, and as a result of comparison, either pieces of the goods identification information or the goods types are identical to each other, and in a case where there is a change between a recognition result that has been recognized in the current processing by the product tag recognition processing unit and a recognition result that has been recognized in the processing before the current processing by the product tag recognition processing unit, and there is a change between image information of a place area to be a processing target in the current processing and image information of a corresponding place area before the current processing, the verification target extraction processing unit extracts as the verification target.

The product tag is installed on the display shelf. Hence, in a case where there are changes in the product tag information that has been recognized from the product tag and in the correspondence relationship between the displayed goods and the product tag, there is a high possibility that the goods are different. Nevertheless, in a case where the recognition from the image information of the place area is identical, there is a high possibility that the recognition of the image information is erroneous recognition. Therefore, it is desirably extracted as the verification target.

In the above-described configuration, the information processing system can be configured to further include: a product tag recognition processing unit configured to recognize product tag information from a product tag that appears in the image information; and a correspondence relationship determination processing unit configured to determine a correspondence relationship between a goods type of the goods displayed and the product tag, in which in a case where the verification target extraction processing unit compares either goods identification information or a goods type that has been recognized in current processing by the displayed goods recognition processing unit with either goods identification information or a goods type that has been recognized in processing before the current processing by the displayed goods recognition processing unit, and as a result of comparison, either pieces of the goods identification information or the goods types are identical to each other, and in a case where there are changes respectively between a recognition result that has been recognized in the current processing by the product tag recognition processing unit and a recognition result that has been recognized in the processing before the current processing by the product tag recognition processing unit, between a correspondence relationship between the goods type of the displayed goods and the product tag that has been determined in the current processing by the correspondence relationship determination processing unit and a correspondence relationship between the goods type of the displayed goods and the product tag that has been determined in the processing before the current processing by the correspondence relationship determination processing unit, and between image information of a place area in the current processing and image information of a corresponding place area before the current processing, the verification target extraction processing unit extracts as the verification target.

Even though the recognition from the image information of the place area is identical, in a case where there are changes in all of the recognition from the other elements, there is a high possibility that the recognition of the image information of the place area is erroneous recognition. Therefore, it is desirably extracted as the verification target.

In the above-described configuration, the information processing system can be configured such that the verification target extraction processing unit notifies the verification target by displaying a predetermined area in the image information and/or the recognition result in a highlighted manner.

The configuration in the present invention enables a person in charge or the like to easily recognize the verification target.

The information processing system in the first aspect is achievable by causing a computer to read and execute a program in the present invention. Specifically, an information processing program for causing a computer to function as: a displayed goods recognition processing unit configured to recognize information indicating goods, the goods appearing in image information obtained by imaging a display shelf; and a verification target extraction processing unit configured to extract a recognition result to be a verification target out of the goods displayed on the display shelf, in which the verification target extraction processing unit extracts the verification target by using a change in the information indicating the goods displayed on the display shelf that has been recognized from the image information.

The use of the information processing system in the present invention enables extraction of a recognition result having a high possibility of necessitating verification, with regard to the recognition result that has been recognized from the image information.

The foregoing and other objects, features, aspects and advantages of the exemplary embodiments will become more apparent from the following detailed description of the exemplary embodiments when taken in conjunction with the accompanying drawings.

### BRIEF DESCRIPTION OF THE DRAWINGS

FIG. 1 is a block diagram schematically illustrating an example of a configuration of an information processing system in the present invention;
FIG. 2 is a block diagram schematically illustrating an example of a configuration of a displayed goods recognition processing unit in the information processing system in the present invention;
FIG. 3 is a block diagram schematically illustrating an example of a configuration of a product tag recognition processing unit in the information processing system in the present invention;
FIG. 4 is a block diagram schematically illustrating an example of a hardware configuration of a computer to be used in the information processing system in the present invention;
FIG. 5 is a flowchart illustrating an example of entire processing in the information processing system in the present invention;
FIG. 6 is a diagram illustrating an example of captured image information;
FIG. 7 is a diagram illustrating another example of the captured image information;
FIG. 8 is a view illustrating an example of image information of the captured image information of FIG. 6 that has been subjected to correct placement;
FIG. 9 is a view illustrating an example of the image information of the captured image information of FIG. 7 that has been subjected to the correct placement;
FIG. 10 is a diagram schematically illustrating a state in which inputs for designating each shelf area and a product tag arrangement area are received for correct placement image information that has been subjected to the correct placement on the image information obtained by imaging a display shelf on which goods are displayed;
FIG. 11 is a diagram schematically illustrating a state in which inputs for designating each shelf area and a product tag arrangement area are received for correct placement image information that has been subjected to the correct placement on the image information obtained by imaging a display shelf on which goods are hung and displayed;
FIG. 12 is a diagram illustrating an example of sample information stored in a sample information storage unit;
FIG. 13 is a view schematically illustrating a relationship between a place and a face in a display shelf;
FIGS. 14A and 14B are each a diagram illustrating an example of image information of a product tag arrangement area in which the image information of the product tag arrangement area of FIG. 10 has been subjected to the correct placement;
FIGS. 15A and 15B are each a diagram illustrating an example of image information of the product tag arrangement area in FIG. 10;
FIG. 16 is a diagram schematically illustrating processing, by a product tag specification processing unit, of specifying an upper side position and a lower side position of a product tag area;
FIG. 17 is a diagram schematically illustrating processing, by the product tag specification processing unit, of specifying a position of a product tag area in a lateral direction;
FIGS. 18A and 18B are each a diagram schematically illustrating a state in which the product tag area is specified from the image information of the product tag arrangement area that has been subjected to the correct placement in FIGS. 14A and 14B;
FIG. 19 is a diagram schematically illustrating image information obtained by binarizing a product tag area in processing by an in-product tag information specification processing unit;
FIG. 20 is a diagram schematically illustrating a state in which a box is generated in processing by the in-product tag information specification processing unit;
FIGS. 21A and 21B are each a diagram schematically illustrating a state in which blocks are generated in processing by the in-product tag information specification processing unit;
FIG. 22 is a diagram illustrating an example of a name of the goods written in a product tag, a result of OCR recognition, a name of the goods having a minimum editing distance from among the names of the goods stored in a goods dictionary, and an editing distance;
FIG. 23 is a diagram illustrating an example of a correspondence relationship of the editing distance allowed to be confirmed for every number of characters of a final candidate;
FIGS. 24A and 24B are each a diagram schematically illustrating processing by a correspondence relationship determination processing unit, in a case where the number of the goods types and the number of the product tags are equal to each other;
FIGS. 25A and 25B are each a diagram schematically illustrating processing by the correspondence relationship determination processing unit, in a case where the number of the goods types is greater than the number of the product tags;
FIGS. 26A and 26B are each a diagram schematically illustrating processing by the correspondence relationship determination processing unit, in a case where the number of the goods types is smaller than the number of the product tags;
FIGS. 27A to 27C are each a diagram schematically illustrating second or subsequent processing by the correspondence relationship determination processing unit;
FIG. 28 is a diagram illustrating an example of the captured image information;
FIG. 29 is a diagram illustrating an example of correct placement image information that has been subjected to correct placement processing on the captured image information of FIG. 28; and
FIG. 30 is a diagram schematically illustrating an example of a condition for extracting as a verification target by a verification target extraction processing unit.

### DETAILED DESCRIPTION OF NON-LIMITING EXAMPLE EMBODIMENTS

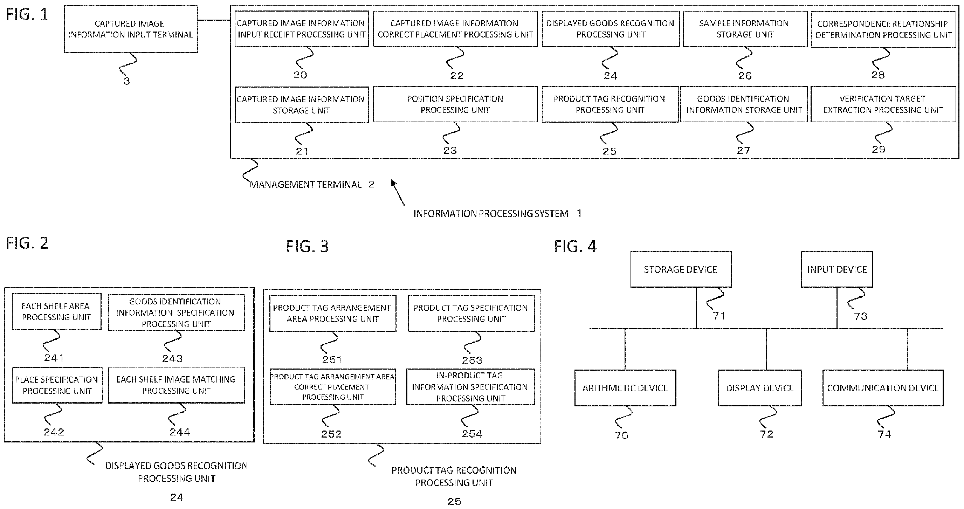

An example of a processing function of an information processing system 1 in the present invention is illustrated as block diagrams in FIGS. 1 to 3. In the information processing system 1, a management terminal 2 and a captured image information input terminal 3 are used. FIG. 1 is a block diagram illustrating overall functions of the information processing system 1, FIG. 2 is a block diagram illustrating functions of a displayed goods recognition processing unit 24 to be described later, and FIG. 3 is a block diagram illustrating functions of a product tag recognition processing unit 25 to be described later.

The management terminal 2 serves as a computer to be used by an organization such as a business enterprise that manages the information processing system 1. In addition, the captured image information input terminal 3 serves as a terminal for inputting image information obtained by imaging a display shelf in a store.

The management terminal 2 and the captured image information input terminal 3 in the information processing system 1 are implemented by use of a computer. FIG. 4 schematically illustrates an example of a hardware configuration of the computer. The computer includes an arithmetic device 70 such as a CPU that performs arithmetic processing of a program, a storage device 71 such as a RAM or a hard disk that stores information, a display device 72 such as a display that displays information, an input device 73 such as a keyboard or a mouse with which information can be input, and a communication device 74, which transmits and receives a processing result of the arithmetic device 70 or information stored in the storage device 71 through a network such as the Internet or a LAN.

In a case where the computer includes a touch panel display, the display device 72 and the input device 73 may be integrally configured. The touch panel display is often used as, for example, a portable communication terminal such as a tablet computer or a smartphone, without being limited thereto.

The touch panel display is a device in which functions of the display device 72 and the input device 73 are integrated such that an input can be made directly on the display with a predetermined input device (such as a pen for a touch panel), a finger, or the like.

The captured image information input terminal 3 may include an imaging device such as a camera, in addition to the above respective devices. As the captured image information input terminal 3, a portable communication terminal such as a mobile telephone, a smartphone, or a tablet computer can also be used.

Regarding the respective units in the present invention, their functions are only logically distinguished from one another, and may physically or practically constitute an identical area. In the processing by each unit in the present invention, its processing order can be appropriately changed. In addition, the processing may be partially omitted. For example, correct placement processing to be described later can be omitted. In such a case, processing can be performed on image information that has not been subjected to the correct placement processing.

For a case of determining a displayed situation of goods, based on the captured image information, the information processing system 1 includes a captured image information input receipt processing unit 20, a captured image information storage unit 21, a captured image information correct placement processing unit 22, a position specification processing unit 23, a displayed goods recognition processing unit 24, a product tag recognition processing unit 25, a sample information storage unit 26, a goods identification information storage unit 27, a correspondence relationship determination processing unit 28, and a verification target extraction processing unit 29.

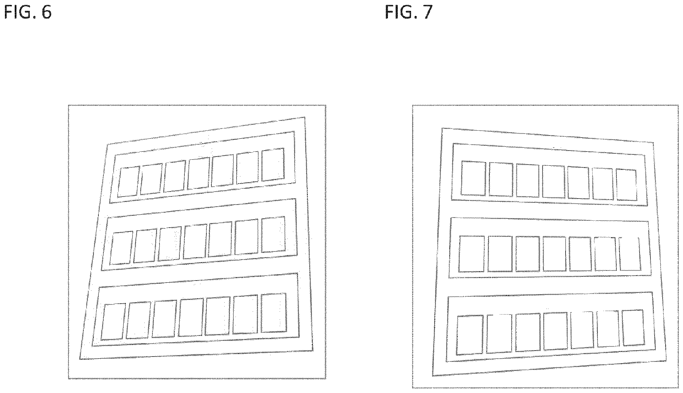

The captured image information input receipt processing unit 20 receives an input of image information (captured image information) of a display shelf in a store that has been imaged by the captured image information input terminal 3, and stores the image information in the captured image information storage unit 21 to be described later. In addition to the captured image information, the inputs of imaged date and time, store identification information such as a store name, image information identification information for identifying the image information, and the like are also desirably received from the captured image information input terminal 3. FIGS. 6 and 7 illustrate examples of the captured image information. In each FIGS. 6 and 7, there are three shelves in a display shelf, and FIGS. 6 and 7 each illustrate the captured image information in which the goods are displayed there. Note that in the present invention, although the processing is not particularly specified, the display shelf or each shelf is long in a lateral direction, in many cases. For this reason, in the processing, each shelf may be separated by a constant width to be set as a processing target in each type of the processing.

The captured image information storage unit 21 stores the captured image information, the imaged date and time, the store identification information, the image information identification information, and the like that have been received from the captured image information input terminal 3 in association with one another. It is sufficient if the captured image information includes image information to be a processing target in the present invention. In general, in simply imaging, it is difficult to image an imaging target object facing the front. Therefore, correction processing for correcting the imaging target object to be in a front-facing state, for example, trapezoid correction processing is desirably performed. In a case of imaging one display shelf with a plurality of pieces of image data, image information obtained by synthesizing those pieces into a single piece of image information is also included. In addition, image information that has been subjected to distortion correction processing is also included in the captured image information.

The captured image information correct placement processing unit 22 generates correct placement image information that has been subjected to the processing of correcting the captured image information stored in the captured image information storage unit 21 so that the imaging target object faces the front (correct placement processing), for example, the trapezoid correction processing. The trapezoid correction processing is correction processing to be performed so that each shelf of the display shelf that appears in the captured image information becomes horizontal and the product tags (for example, price labels) for the goods displayed therein become vertical. The correct placement means changing the image information so that the optical axis of the lens of the imaging device is made to be the same as that of a case of imaging from a sufficiently long distance along a direction perpendicular to a plane to be an imaging target. An example is the trapezoid correction processing.

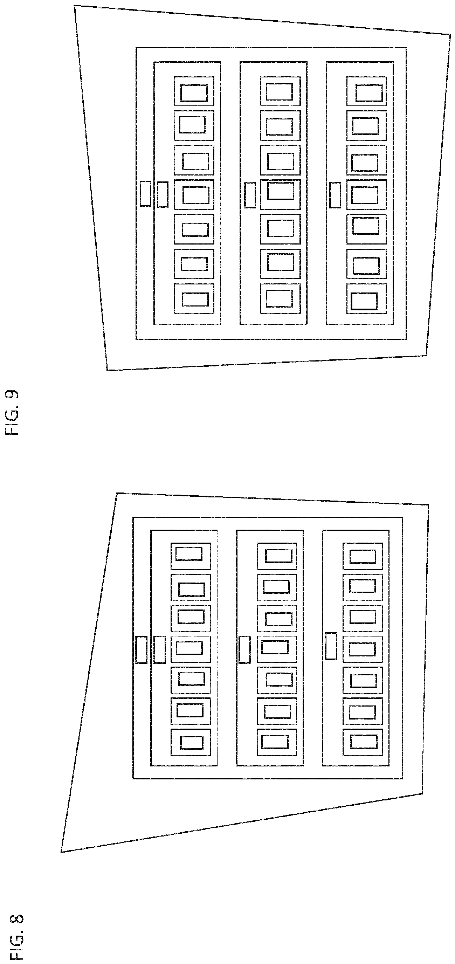

In the trapezoid correction processing performed by the captured image information correct placement processing unit 22, inputs for designating four vertexes in the captured image information are received, and the trapezoid correction processing is performed by use of the respective vertexes. The four vertexes for receiving the designation may be four vertexes of each shelf of the display shelf or the four vertexes of shelf positions of the display shelf. In addition, four vertexes of a group of two or three shelves may be used. Any four points can be designated for the four vertexes. FIG. 8 illustrates an example of the captured image information (correct placement image information) that has been subjected to the correct placement on the captured image information of FIG. 6, and FIG. 9 illustrates an example of the captured image information that has been subjected to the correct placement on the captured image information of FIG. 7.

The position specification processing unit 23 specifies an area of each shelf where goods are likely to be arranged (each shelf area) and an area where a product tag is likely to be attached (product tag arrangement area) from the correct placement image information that has been subjected to the trapezoid correction processing on the captured image information, by the captured image information correct placement processing unit 22. That is, the display shelf appears in the captured image information and the correct placement image information. However, the display shelf includes each shelf area where goods are likely to be displayed and a product tag arrangement area where the product tag for the goods displayed on each shelf area is likely to be attached. Therefore, each shelf area and the product tag arrangement area are specified from the correct placement image information. For specifying each shelf area and the product tag arrangement area, an operator of the management terminal 2 may manually designate each shelf area and the product tag arrangement area, the position specification processing unit 23 may receive the designation, or each shelf area and the product tag arrangement area may be automatically specified in second or subsequent processing, based on information of each shelf area and the product tag arrangement area, inputs of which have been manually received in first processing.

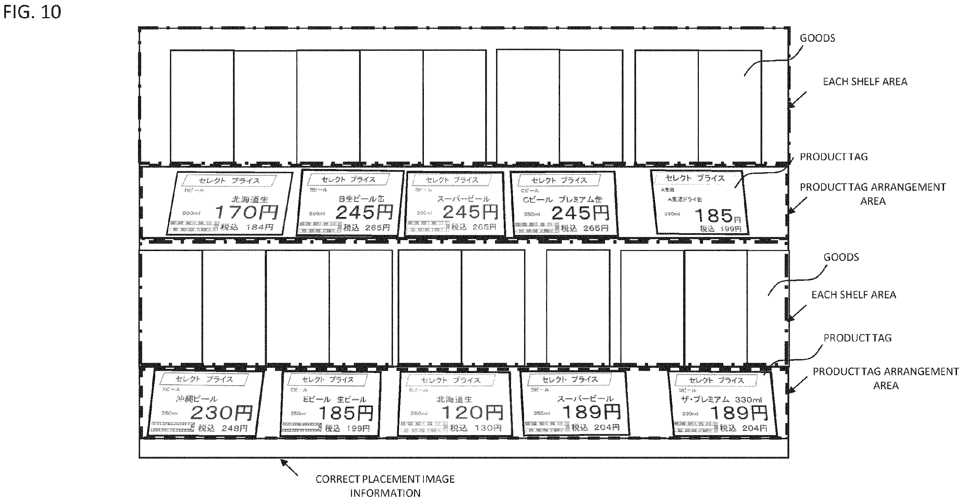

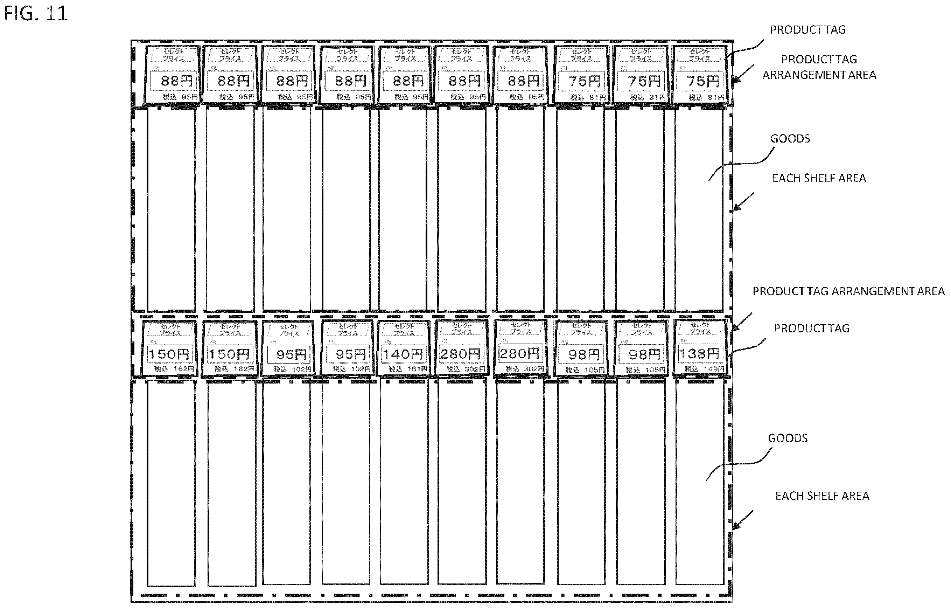

FIG. 10 schematically illustrates a state in which the inputs for designating each shelf area and the product tag arrangement area have been received, for the correct placement image information, in which the image information obtained by imaging a display shelf on which goods such as beverage cans are displayed has been subjected to the correct placement. In addition, FIG. 11 schematically illustrates a state in which the inputs for designating each shelf area and the product tag arrangement area have been received, for the correct placement image information in which the image information obtained by imaging a display shelf, on which goods such as toothbrushes are hung and displayed, has been subjected to the correct placement.

Note that in specifying each shelf area and the product tag arrangement area, the position specification processing unit 23 may specify each shelf area and the product tag arrangement area by using deep learning. In this case, the above correct placement image information may be input into a learning model in which weighting coefficients between neurons of the respective layers of a neural network including a large number of intermediate layers are optimized, and each shelf area and the product tag arrangement area may be specified, based on its output value. In addition, as the learning model, it is possible to use a model in which each shelf area and the product tag arrangement area are given, as correct answer data, to various pieces of the correct placement image information.

The displayed goods recognition processing unit 24 performs processing of recognizing the goods displayed on each shelf in the display shelf that appears in the correct placement image information.

In a case of recognizing goods identification information of the goods displayed on the display shelf, based on the captured image information, the displayed goods recognition processing unit 24 includes an each shelf area processing unit 241, a place specification processing unit 242, a goods identification information specification processing unit 243, and an each shelf image matching processing unit 244.

The each shelf area processing unit 241 specifies the image information of each shelf area that has been specified by the position specification processing unit 23, as each shelf area image information. The each shelf area processing unit 241 may actually cut out the image information, or may virtually cut out the image information by specifying the image information of the area without actually cutting out the image information. Note that in a case where there are a plurality of shelves in the display shelf, each shelf is cut out as each shelf area image information. In addition, coordinates indicating each shelf area denote coordinates of vertexes for specifying such an area, and may include, for example, coordinates of four points or coordinates of two points such as an upper right and a lower left or an upper left and a lower right in the correct placement image information. Further, the coordinates denote relative coordinates with a predetermined position as a reference (for example, an upper left vertex of the display shelf) in the image information, such as the display shelf in the correct placement image information.

The place specification processing unit 242 specifies an area of a place for every shelf in each shelf area in the correct placement image information. The place denotes an area where the goods are to be placed, and it does not matter whether the goods are placed. The size of the area of the place is identical or substantially identical to the goods to be placed there. Then, the place where the goods are actually displayed will be referred to as a "face". In addition, a case where goods are not displayed on the place will be referred to as "empty". The place specification processing unit 242 preferably divides processing into first place specification processing and second or subsequent place specification processing.

In the first place specification processing by the place specification processing unit 242, a place is specified within a range of an area (preferably, a rectangular area) constituted of the coordinates of each shelf that have been specified by the position specification processing unit 23. Specifically, the area of the place is specified by specifying a narrow shadow generated between the goods in each shelf area, specifying a repeated pattern of image, specifying a step on an upper side of a package, specifying a separation position based on a restriction such as an identical goods width, or the like. Note that in specifying the area of the place, the place specification processing unit 242 may specify the area of the place by using the deep learning. In this case, the image information of an area to be a processing target, for example, each shelf area may be input into the learning model in which the weighting coefficients between neurons of the respective layers of the neural network including a large number of intermediate layers are optimized, and the area of the place may be specified, based on its output value. In addition, as the learning model, it is possible to use a learning model in which areas to be various processing targets, for example, an area of a place is given, as correct answer data, to the image information of each shelf area.

As the processing of specifying the place, any method is adoptable depending on a category of the goods or a form of the goods, without being limited to the above description. In addition, a correction input by a person in charge may be received for the place that has been automatically specified. Furthermore, an input of the position of the place may be received from the person in charge. Regarding the coordinates of the area that constitute the specified place, imaged date and time information, store information, image information identification information of the captured image information, image identification information of the correct placement image information, and place identification information for identifying the place are managed in association with the coordinates of the area of the place in the correct placement image information. In addition, coordinates indicating the area of the place denote coordinates of vertexes for specifying a rectangular area, and may be, for example, coordinates of four points or coordinates of two points such as an upper right and a lower left or an upper left and a lower right in the correct placement image information. Further, the coordinates denote relative coordinates with a predetermined position as a reference (for example, an upper left vertex of the display shelf) in the image information, such as the display shelf in the correct placement image information.

In general, goods of similar types are placed on one shelf, in many cases. In such cases, the sizes of the goods are almost the same. Therefore, in a case where an area of a place for one type of the goods is specified, the place in such each shelf may be specified by repeatedly setting the area in such each shelf.

In the second or subsequent place specification processing by the place specification processing unit 242, for an identical each shelf of an identical display shelf, the coordinates of the area of the place that have been specified by correct placement image information in previous processing (N-1'th times) may be set to the coordinates of the area of the place that has been specified by the correct placement image information in current processing (N'th times).

The goods identification information specification processing unit 243 specifies goods identification information of the goods displayed on the place for every shelf of the display shelf, by using sample information stored in the sample information storage unit 26. Examples of the goods identification information include, but are not limited to, the name of the goods and a JAN code assigned to the goods. Any information may be used as long as it is possible to identify the goods.

The goods identification information specification processing unit 243 performs the following processing. That is, for every place, by matching the image information of a place with the sample information of the goods stored in the sample information storage unit 26, the goods identification information of the goods displayed on such a place is specified. Specifically, first, a similarity between the image information of the area constituted of the coordinates of the place to be a processing target and the sample information stored in the sample information storage unit 26 is determined, and the goods identification information corresponding to the sample information having the highest similarity is specified. In a case where the specified similarity is equal to or greater than a predetermined threshold value, the specified goods identification information is specified as the goods identification information of the goods displayed on the place constituted of the coordinates.

Here, in order to determine the similarity between the image information of the place and the sample information, the following processing is performed. First, in the processing before the goods identification information specification processing unit 243 performs the goods identification information specification processing, the direction of the image information of the area of the place on each shelf in the correct placement image information and the direction of the sample information are the same (are not overturned or inverted), and the sizes of the respective pieces of image information are substantially the same (in a case where the sizes of the pieces of image information are different from each other within a predetermined range or more, the sizes are kept adjusted so that the sizes of the pieces of image information fall within the predetermined range before the determination of the similarity).

In order to determine the similarity between the image information of the place and the sample information, the goods identification information specification processing unit 243 extracts a feature point based on an image feature quantity (for example, local feature quantity) of the image information of the place and a feature point based on an image feature quantity (for example, local feature quantity) of the sample information, respectively. Then, a pair having the highest similarity between the feature point of the image information of the place and the feature point of the sample information is detected, and differences in coordinates of respectively corresponding points are calculated. Then, an average value of the differences is calculated. The average value of the differences indicates an overall average movement amount of the image information of the place and the sample information. Then, the coordinate differences of pairs of all the feature points are compared with the average coordinate difference, and a pair having a large deviation degree are excluded. Then, the similarity is ranked among the number of remaining corresponding points.

The similarity between the image information of the place and the sample information can be calculated in the method as described above. In addition, in order to improve its accuracy, an earth movers distance (EMD) between the color histograms may be calculated to be set as an index of the similarity. Accordingly, it becomes possible to make a comparison of similarity that is relatively strong against an environmental change in brightness information or the like of the captured image information, and to specify the similarity with high accuracy.

In the determination of the similarity, other than the above description, an EMD between signatures (aggregation of image feature quantities and weights) of the image information of the area of each place may be calculated to be set as an index of the similarity. As the image feature quantity of the signature, for example, the frequency distribution in an HSV color space of the image information of the place area is obtained, and grouping is conducted for hue and saturation, so that the image feature quantity can be set with the number of features and the area in the HSV color space. The grouping for the hue and the saturation is conducted to reduce a dependence degree on the brightness so as not to be largely influenced by an imaging condition.

In addition, to accelerate the processing, it is possible to use a similarity such as an L2 distance between image feature quantities such as a color correlogram or a color histogram of the image information in an appropriate color space, instead of the signature and the EMD.

The determination of the similarity is not limited to the above description. The goods identification information that has been specified is stored in the goods identification information storage unit 27 in association with the imaged date and time information, the store information, the image information identification information of the captured image information, the image identification information of the correct placement image information, and the place identification information for identifying the place.

The goods identification information specification processing unit 243 may specify the goods identification information by using the deep learning, when specifying the goods identification information of the goods displayed in the image information of the place. In this case, the image information of the place may be input into the learning model in which the weighting coefficients between neurons of the respective layers of the neural network including a large number of intermediate layers are optimized, and the goods identification information may be specified, based on its output value. In addition, as the learning model, it is possible to use a model in which the goods identification information is given, as correct answer data, to image information of various places.

Note that a place in which the goods identification information has been specified becomes a face, and thus information indicating that such a place is the "face" is stored in the goods identification information storage unit 27. A place in which the goods identification information has not been specified becomes "empty", and thus information indicating that the place is "empty" is stored in the goods identification information storage unit 27.

The goods identification information that has been specified as described above is stored in the goods identification information storage unit 27 in association with the imaged date and time information, the store information, the image information identification information of the captured image information, the image identification information of the correct placement image information, the place identification information for identifying the place, and information indicating the face or the empty.

On the basis of the image information of the area of each shelf in the correct placement image information in the previous processing (N-1'th times) and the image information of the area of each shelf in the correct placement image information in the current processing (N'th times), the each shelf image matching processing unit 244 determines that the goods identification information or the "empty" of each place in such each shelf is identical, in a case where the similarity is high. Such similarity determination processing, as described above, may be a similarity determination based on the image feature quantity of the image information of the area in each shelf in the correct placement image information in the previous processing (N-1'th times) and the image information of the area in each shelf in the correct placement image information in the current processing (N'th times), or may use the EMD between color histograms. In addition, there is no intention of being limited thereto. Then, instead of the specification processing in the unit of every place by the goods identification information specification processing unit 243, the goods identification information specification processing unit 243 is caused to store the goods identification information of each place in such each shelf in the correct placement image information of the N'th times in the goods identification information storage unit 27, as being identical to the goods identification information of each place in its identical each shelf of the N-1'th times. Accordingly, it becomes possible to omit processing for each shelf in which a change hardly occurs, such as each shelf in which a change does not occur in the goods so much, or conversely each shelf that is managed in an extremely short cycle. Note that the processing by the each shelf image matching processing unit 244 does not have to be provided.

The displayed goods recognition processing unit 24 may collectively perform the processing of the place specification processing unit 242 and the processing of the goods identification information specification processing unit 243 by use of the deep learning or the like.

The product tag recognition processing unit 25 in the management terminal 2 performs processing of recognizing the product tag information written on the product tag in a product tag area of the display shelf that appears in the correct placement image information. Examples of the product tag information include price, without being limited thereto.

In recognizing the goods identification information of the product tag, based on the captured image information, the product tag recognition processing unit 25 includes a product tag arrangement area processing unit 251, a product tag arrangement area correct placement processing unit 252, a product tag specification processing unit 253, and an in-product tag information specification processing unit 254.

The product tag arrangement area processing unit 251 cuts out image information of the product tag arrangement area that has been specified by the position specification processing unit 23, as product tag arrangement area image information. The product tag arrangement area processing unit 251 may cut out actually as the image information, or may cut out virtually as the image information without cutting out actually as the image information. Cutting out virtually the image information means causing the processing to be performed on a specified area, for example, a range of a product tag arrangement area as a processing target. Note that in a case where there are a plurality of product tag arrangement areas in the display shelf, the plurality of product tag arrangement areas are respectively cut out as the product tag arrangement area image information. In addition, coordinates indicating the product tag arrangement area denote coordinates of vertexes for specifying the area, and may be, for example, coordinates of four points or coordinates of two points such as an upper right and a lower left or an upper left and a lower right in the correct placement image information. Further, the coordinates denote relative coordinates with a predetermined position as a reference (for example, an upper left vertex of the display shelf) in the image information, such as the display shelf in the correct placement image information.

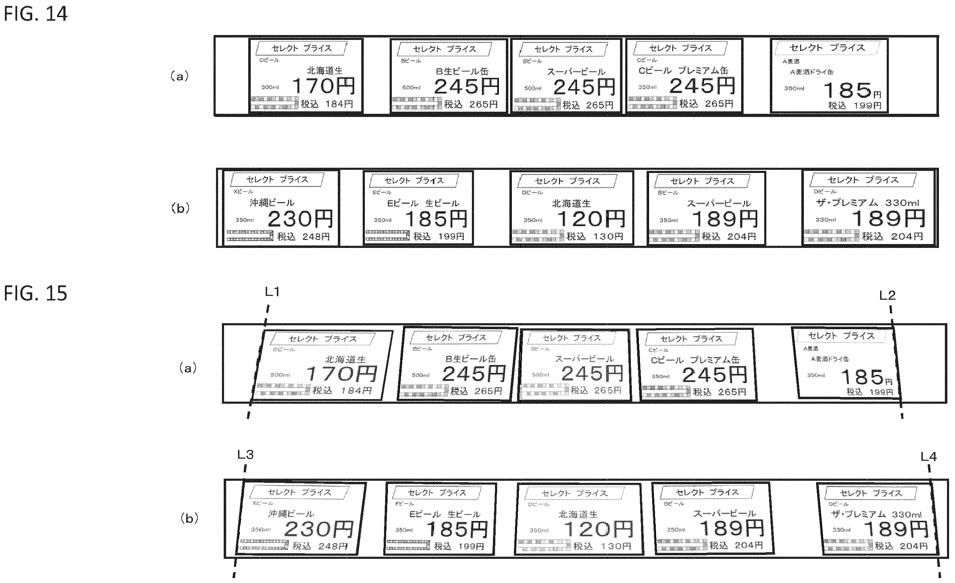

The product tag arrangement area correct placement processing unit 252 performs the trapezoid correction processing for conducting the correct placement on the product tag arrangement area image information that has been cut out by the product tag arrangement area processing unit 251. While the surface of the display shelf is vertical, the surface of the product tag faces upward relative to the vertical surface so as to be easily seen by customers. Therefore, the recognition accuracy is improved by conducting the correct placement on the image information of the product tag arrangement area. FIGS. 14A and 14B illustrate examples of the image information of the product tag arrangement area that has been subjected to the correct placement on the image information of the product tag arrangement area of FIG. 10. FIG. 14A illustrates the image information of the product tag arrangement area that has been subjected to the correct placement on the image information of the product tag arrangement area in an upper each shelf in FIG. 10, and FIG. 14B illustrates the image information of the product tag arrangement area that has been subjected to the correct placement on the image information of the product tag arrangement area in a lower each shelf in FIG. 10.

By performing following processing, the product tag arrangement area correct placement processing unit 252 conducts the correct placement for the image information of the product tag arrangement area. That is, edge detection is conducted in the image information of the product tag arrangement area, and contour lines (contour lines within a predetermined angle range from the vertical (90 degrees), for example, 70 degrees to 110 degrees) that are similar to the vertical and that has a certain length or more is specified at positions close to both left and right ends. Note that the contour lines at the positions close to both left and right ends are preferably extracted, without being limited thereto. In the case of the image information of the product tag arrangement area of FIG. 10, L1 to L4 are specified as illustrated in FIGS. 15A and 15B. FIG. 15A illustrates a product tag arrangement area of the upper each shelf in FIG. 10, and FIG. 15B illustrates a product tag arrangement area of the lower each shelf in FIG. 10. Note that the contour lines L1 to L4 to be specified are not actually drawn in the image information of the product tag arrangement area. Then, the trapezoid correction processing is performed on the image information of the product tag arrangement area, so that L1 and L2 in FIG. 15A and L3 and L4 in FIG. 15B become vertical lines. By performing such processing, the image information of the product tag arrangement area has been subjected to the correct placement, and thus the image information of the product tag arrangement area that has been subjected to the correct placement illustrated in FIGS. 14A and 14B can be obtained. Note that the product tag arrangement area correct placement processing unit 252 performs the processing, and thus the accuracy by the product tag specification processing unit 253 and the in-product tag information specification processing unit 254 can be improved. Therefore, the processing is preferably performed, but can be omitted. In this case, the product tag specification processing unit 253 and the in-product tag information specification processing unit 254 perform processing on the product tag arrangement area that has been cut out by the product tag arrangement area processing unit 251.

The product tag specification processing unit 253 specifies an area of each product tag (product tag area) from the product tag arrangement area image information that has been subjected to the correct placement. Three types of methods can be mainly used for processing of specifying the product tag area. A first method is a method for specifying a product tag area, based on a contour line, a second method is a method for specifying a product tag area by matching an overall feature such as an overall light and dark distribution with image information of a template of the product tag, and a third method is a method for specifying a product tag area by using the deep learning. Note that any method other than the first method to the third method can also be used.

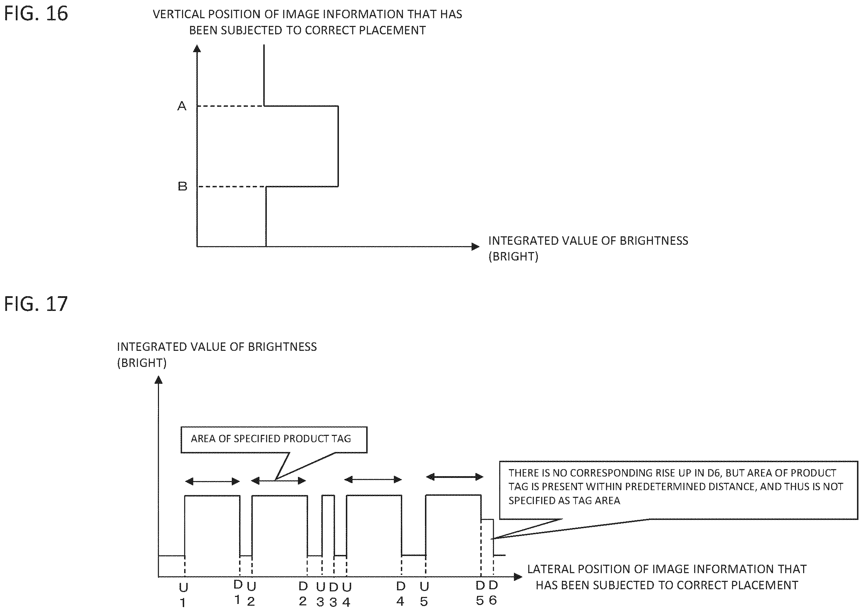

The first method is a method of using the fact that the base color (background color) of the product tags is white (brighter than surrounding colors) in many cases. That is, first, a histogram obtained by laterally integrating brightness information of the image information is generated from the image information of the product tag arrangement area that has been subjected to the correct placement. Then, rise-up and fall-down positions of the histogram are specified, and an upper side position A and a lower side position B of the product tag are specified. FIG. 16 schematically illustrates this processing. Rising up denotes a position that increases steeply (by equal to or greater than a predetermined ratio) from black to white in the histogram, and falling down denotes a position that decreases steeply from white to black in the histogram.

Then, from the image information of the product tag arrangement area that has been subjected to the correct placement, a part between the upper side position A and the lower side position B is cut out, and a histogram in which the brightness information of the product tag arrangement area image information that has been subjected to the correct placement is laterally integrated is generated. Then, the rise-up and fall-down positions in the histogram are specified. A rise-up position is paired with a fall-down position within a predetermined distance range on the right side of the rise-up position, they are respectively set as a left side position and a right side position, and a product tag area is specified. Then, in a case where there is no product tag area within a predetermined distance, a product tag area is specified on the right side of a rise-up position with which a pair cannot be formed, and on the left side of a fall-down position with which a pair cannot be formed. FIG. 17 schematically illustrates this processing.

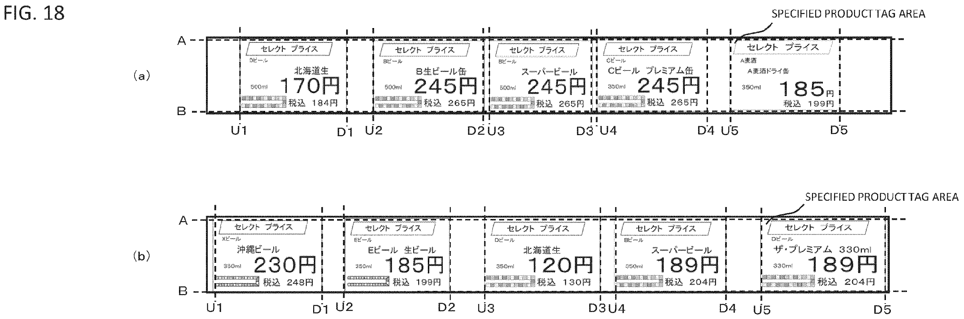

FIGS. 18A and 18B illustrate states in which the product tag areas are respectively specified from the image information of the product tag arrangement areas respectively in FIGS. 14A and 14B that have been subjected to the correct placement in the first method. A rectangular area, which is constituted of the upper side position A, the lower side position B, a left side position (up) U, and a right side position (down) D, denotes an area of the product tag that has been specified.

Note that there are some product tags each having a base color (background color) other than white, for example, red, and characters are written in white. Therefore, in a case where price information or the goods identification information in the product tag cannot be recognized in the above-described processing, the relationship between the white color and the black color may be reversed (brightness and darkness may be reversed) in the image information of the product tag arrangement area, and processing similar to the above-described processing may be performed. Accordingly, it becomes possible to correspond to a product tag having a dark base color and a bright character color.

Note that the processing of reversing the brightness in the image information of the product tag arrangement area may be performed in the case where the information in the product tag cannot be recognized, and in addition, in a case where the information cannot be normally recognized in any type of the processing of specifying the goods identification information, or may be performed regardless of whether the information can be recognized.

The second method is so-called template matching. That is, the image information of the product tag is registered beforehand as a template, and the product tag area is specified by matching the template with the image information of the product tag arrangement area that has been subjected to the correct placement.

The product tag includes a tax-exclusive price, a tax-inclusive price, goods identification information (such as the name of the goods), a manufacturer name, a rated specification, or the like. Therefore, the image information of the product tag that serves as the template includes the goods identification information such as the name of the goods, specific numerals of its price, and characters. In this case, the image information including such parts becomes a determination target in the image matching processing. Hence, such parts are preferably changed into mosaics or deleted, for neutralization or exclusion from the determination target. The neutralization means that high points or low points are not assigned for any input, and the exclusion means that such a part is excluded from a matching target in the image matching processing.

The third method is a method of using the deep learning. In this case, the product tag specification processing unit 253 may input the image information of the product tag arrangement area that has been subjected to the correct placement into the learning model in which the weighting coefficients between neurons of the respective layers of the neural network including a large number of intermediate layers are optimized, and may specify the product tag area, based on its output value. In addition, as the learning model, it is possible to use a model in which the product tag area is given, as correct answer data, to the image information of various product tag arrangement areas.

The in-product tag information specification processing unit 254 performs processing of specifying information written in the product tag area that has been specified by the product tag specification processing unit 253 by OCR recognition, the deep learning, or the like. The OCR recognition can be conducted on the entirety or a part of the area that has been specified as the product tag area. In a case of conducting the OCR recognition on the entirety of the area that has been specified as the product tag area, there is a high possibility that erroneous recognition occurs due to noise or the like. Therefore, the target area to be subject to the OCR recognition is preferably limited. In this case, it is sufficient if the processing corresponding to the first method to the third method respectively used by the product tag specification processing unit 253 is performed.

In a case where the first method is used by the product tag specification processing unit 253, first, binarization processing is performed on the product tag area that has been specified. As the binarization processing, from a method of using the brightness of the HSV color space, Otsu method, and a method for extracting a red color (a red color is high in use frequency for numerals and character strings of the product tag, in addition to a black color), one or an extracted combination of a plurality of the methods therefrom can be selected as a candidate.

Then, labeling processing is performed on the image information that has been binarized. The labeling processing denotes processing of assigning an identical number (identification information) to consecutive pixels in white or black in the binarized image information, and forming one island of (grouping) the consecutive pixels. Then, a rectangular area (box) including the island that has been detected by the labeling processing is generated, and its height, width, and baseline of the box are obtained. In generating the box, a rectangle surrounded by minimum vertical and horizontal line segments that surround the area labeled with the identical number is preferably generated, without being limited thereto. Note that in generating the box, an island that does not satisfy a height or a width to be a predetermined threshold value is regarded as noise not to generate the box, and is removed from a processing target without change. For example, an island that is too short in height has a possibility of a horizontal ruled line or dust on an image, an island that is too wide in width has a possibility of a logo or the like, and these are removed as noise.

Characters used in a product tag are generally characters with clear outlines of the entire characters, such as bold Gothic, in many cases. For this reason, even in a case where there is some blurring in the image information, it is possible to detect a group of characters that form one character string, as an island having uniform height and baseline.

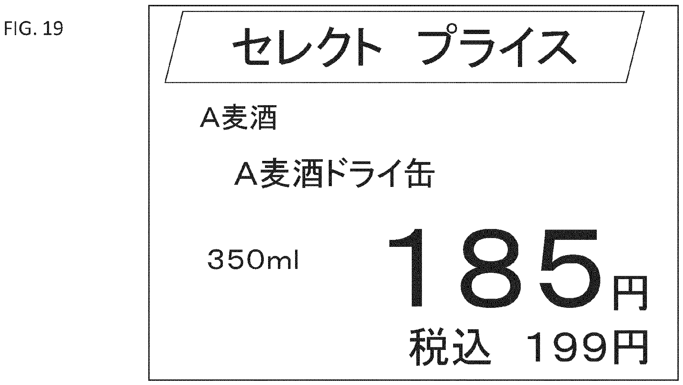

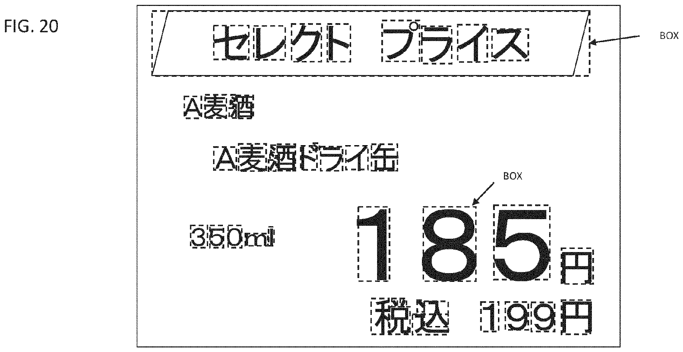

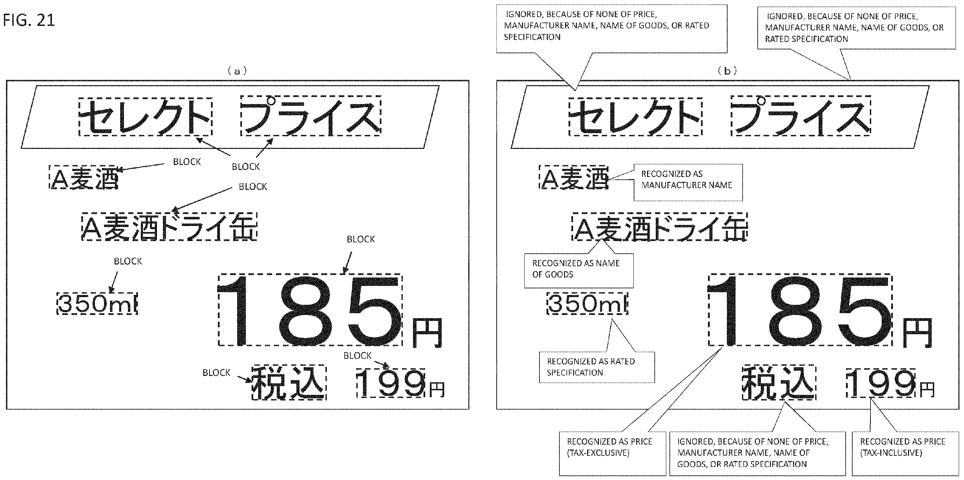

Then, the in-product tag information specification processing unit 254 merges adjacent boxes each having a predetermined similarity to constitute a block. That is, consecutive boxes having baselines and heights that match within a predetermined range and having heights and widths within a certain threshold range are merged to constitute a block. In this situation, small boxes or the like between blocks to be merged are also merged to constitute one block. Accordingly, a voiced sound symbol, a semi-voiced sound symbol, a hyphen, and the like are also incorporated into one block. The block is an area to be subject to the OCR recognition. Then, from among the blocks, a block that is the highest in height is estimated as a price area (tax-exclusive price area), and the OCR recognition is conducted. In addition, the OCR recognition is similarly conducted on other blocks. By performing the processing as described above, character recognition processing can be performed more accurately than the OCR recognition performed on a document part freely laid out over a plurality of lines in the product tag area. FIGS. 19 to 21B schematically illustrate this processing. FIG. 19 illustrates binarized image information, and FIG. 20 is a diagram illustrating a state in which boxes (areas indicated by broken lines) are generated. In addition, FIGS. 21A and 21B are each a diagram illustrating a state in which blocks (areas indicated by broken lines) are generated.

As described above, the in-product tag information specification processing unit 254 is capable of conducting character recognition of the information written in the product tag.

When the second method is used by the product tag specification processing unit 253, the position and size (height, width) of each character frame in which the goods identification information such as the tax-exclusive price, the tax-inclusive price, the manufacturer name, and the name of the goods, and the rated specification are written are set beforehand in the image information of the product tag as the template. Therefore, the image information of the corresponding part is cut out from the product tag area that has been specified by the product tag specification processing unit 253, and the OCR recognition processing is performed. In this situation, by defining, as a restriction condition, a character type (for example, which of numeral, Roman character, symbol, Japanese kana character, and Japanese kanji character is included, and the like) used in the goods identification information such as the price, the manufacturer name, and the name of the goods, and the rated specification, it is possible to improve the accuracy in the OCR recognition processing.

In a case where the third method is used by the product tag specification processing unit 253, in-product tag information may be specified by use of the deep learning. In this case, the in-product tag information specification processing unit 254 may input the image information of the product tag area into the learning model in which the weighting coefficients between neurons of the respective layers of the neural network including a large number of intermediate layers are optimized, and may specify the goods identification information such as the tax-exclusive price, the tax-inclusive price, the manufacturer name, and the name of the goods, and information of the rated specification or the like included in the product tag area, based on its output value. As the learning model, it is possible to use a model in which the goods identification information such as the tax-exclusive price, the tax-inclusive price, the manufacturer name, and the name of the goods, and the information of the rated specification or the like are given, as correct answer data, to the image information of various product tag areas.

The product tag recognition processing unit 25 may collectively perform two or more types of the processing by the product tag arrangement area correct placement processing unit 252, the product tag specification processing unit 253, and the in-product tag information specification processing unit 254, by use of the deep learning or the like.

Furthermore, the in-product tag information specification processing unit 254 may perform processing of checking consistency of the information that has been read. As consistency check processing, two types of consistency check processing that are consistency check processing by dictionary collation and a logical check are preferably performed.

The consistency check processing by the dictionary collation will be performed, for example, as follows. The information processing system 1 includes a goods dictionary (not illustrated) that stores goods identification information such as a name of goods having a possibility of being displayed on a display shelf and code information (for example, a JAN code) corresponding thereto in association with each other. Then, character string similarity degree evaluation is conducted between a character string other than the character string that has been read from an area indicating the price that has been recognized by the in-product tag information specification processing unit 254 and the goods identification information such as all names of the goods registered in the goods dictionary. For example, an editing distance (Levenshtein distance), a Jaro-winkler distance, or the like can be used.

In a case where there is one maximum value of the character string similarity degree obtained above, the goods identification information such as the name of the goods is set as a final candidate. Then, an allowable similarity degree is defined beforehand with regard to the length of the character string of the goods identification information such as the name of the goods that is the final candidate. In a case where the similarity degree is equal to or greater than the allowable similarity degree, the goods identification information such as the name of the goods is identified. In a case where the similarity degree does not reach the allowable similarity degree, the character string that has been read is kept unconfirmed. In addition, in a case where there are a plurality of goods each having the similarity degree of the maximum value, the character string that has been read is kept unconfirmed.

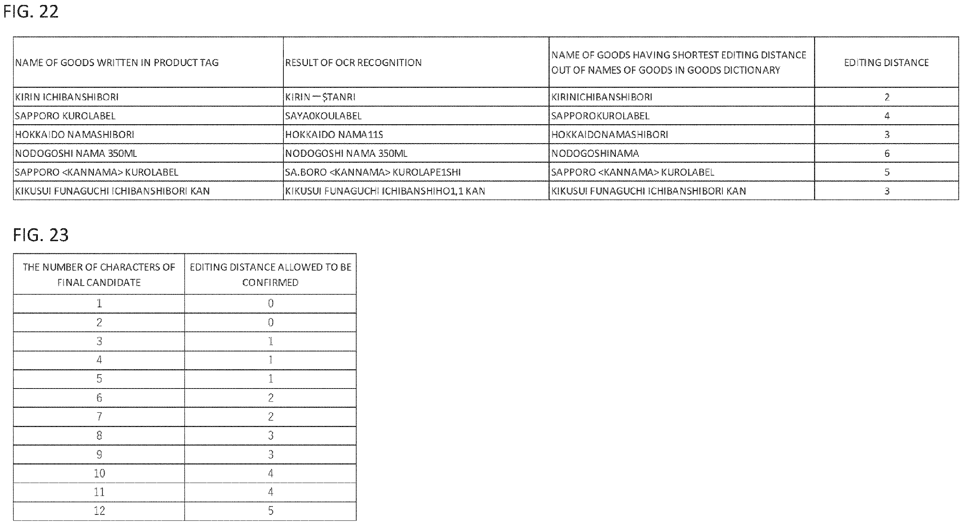

An editing distance that is one of the character string similarity degree evaluations, is one type of a distance indicating how two character strings are different from each other, and specifically denotes a minimum number of procedures necessary for transforming one character string into the other character string by insertion, deletion, or substitution of one character. FIG. 22 illustrates examples of names of the goods written in product tags, results of the OCR recognition, the names of the goods having minimum editing distances among the names of the goods stored in a goods dictionary, and editing distances. In addition, FIG. 23 illustrates a table of a correspondence relationship of the editing distances allowed to be confirmed for every number of characters of the final candidate. Note that in the present specification, a description will be given with regard to a case where processing is performed by use of the editing distance. However, the character string similarity degree evaluation, by which the similarity degree is defined to be greater by substitution than by insertion or deletion, may be conducted.

Then, after the goods identification information such as the name of the goods having a minimum editing distance is obtained, an editing distance of a character string obtained by excluding a corresponding part of the goods identification information such as the name of the goods from a result of the OCR recognition or the like with respect to each rated specification stored in a separately provided rated specification dictionary (not illustrated) and an editing distance with respect to each manufacturer name stored in a manufacturer name dictionary (not illustrated) are respectively obtained. For example, in an example of "Nodogoshi Nama 350ml" in FIG. 22, the part of "350ml" matches "350ml" in the rated specification dictionary at an editing distance 0, and is identified as a character string of a rated specification part. Similarly, the editing distance is also obtained for a manufacturer name, and a character string at the minimum editing distance is identified as the manufacturer name. Then, the character strings of the rated specification part and the manufacturer name part are removed from the OCR recognition result. To the remaining character string after the removal, a character string having a shortest editing distance in the goods name dictionary is obtained, and it is determined whether the character string falls within an allowable editing distance. In a case where it falls within the allowable editing distance, the goods identification information such as the name of the goods, the manufacturer name, and the rated specification are confirmed. By performing the processing as described above, also in a case where the goods identification information such as the name of the goods includes the rated specification and the manufacturer name, it is possible to confirm them appropriately. Note that the rated specification dictionary denotes a dictionary that stores rated specifications (volumes and the like) of the goods having a possibility of being displayed on a display shelf. The manufacturer name dictionary denotes a dictionary that stores manufacturer names of the goods having a possibility of being displayed on a display shelf.

In order for a user to finally determine and approve the recognition result by the in-product tag information specification processing unit 254, in making a display for receiving an input such as a selection of a recognition result, the display is desirably made in a method capable of specifying a confirmed character string and an unconfirmed character string. For example, different colors are used between the confirmed character string and the unconfirmed character string, or information indicating confirmed or unconfirmed is attached to the confirmed character string and/or the unconfirmed character string. Regarding the unconfirmed character string, in a case where there are a plurality of pieces of goods identification information such as the name of the goods having the minimum editing distance, each piece of goods identification information may be displayed.

The logical check (determination processing of logical consistency on recognized information) by the in-product tag information specification processing unit 254 can be performed as follows. For example, in a case where two prices are read as price areas, one is a tax-exclusive price and the other one is a tax-inclusive price. However, in a case where the tax-exclusive price is higher than the tax-inclusive price, they are reversed and then subject to recognition. In addition, in a case where a value obtained by multiplying a consumption tax rate by the tax-exclusive price is not equal to the tax-inclusive price, it is assumed that either one of the tax-exclusive price or the tax-inclusive price or both of them have been erroneously recognized. Furthermore, in a case where the goods identification information such as the name of the goods is recognized, it is determined whether the goods falls within a usual price range of the goods or a goods category. Further, it may be determined whether a correspondence relationship among the goods identification information such as the name of the goods, the manufacturer name, and the rated specification match.

By checking the consistency of the information in the product tag as described above, it is possible to confirm the information included in the product tag that appears in the captured image information. The information that has been confirmed in this manner can be output in a table format, for example.

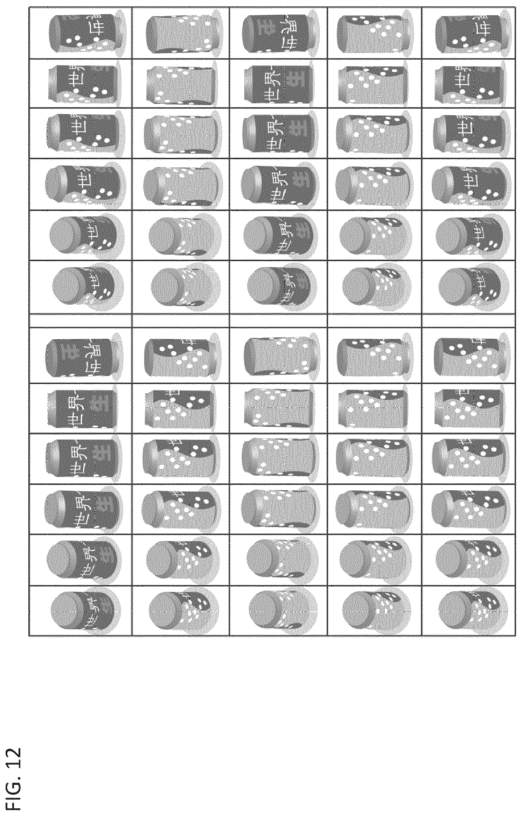

The sample information storage unit 26 in the management terminal 2 stores sample information for identifying which goods are displayed on each shelf of the display shelf that appears in the correct placement image information. The sample information denotes image information obtained by imaging goods having a possibility of being displayed on a display shelf from a plurality of angles, such as up and down, left and right, and oblique. FIG. 12 illustrates an example of the sample information stored in the sample information storage unit 26. FIG. 12 illustrates a case where canned beer has been imaged from various angles as the sample information, without being limited to the canned beer. The sample information storage unit 26 stores the sample information and the goods identification information in association with each other.

Note that together with the sample information or instead of the sample information, the sample information storage unit 26 may store information that has been extracted from the sample information and that is necessary for calculating the similarity, for example, information of a pair of an image feature quantity and its position. It is assumed that the sample information also includes the information necessary for calculating the similarity. In this case, the displayed goods recognition processing unit 24 no longer has to calculate the image feature quantity for the sample information, whenever performing the matching processing between the image information of the area of the place to be described later and the sample information, and the calculation time can be shortened.

In addition, the sample information stored in the sample information storage unit 26 can also be used as correct answer data, when the displayed goods recognition processing unit 24 performs processing of recognizing goods that are displayed on the display shelf by use of the deep learning.

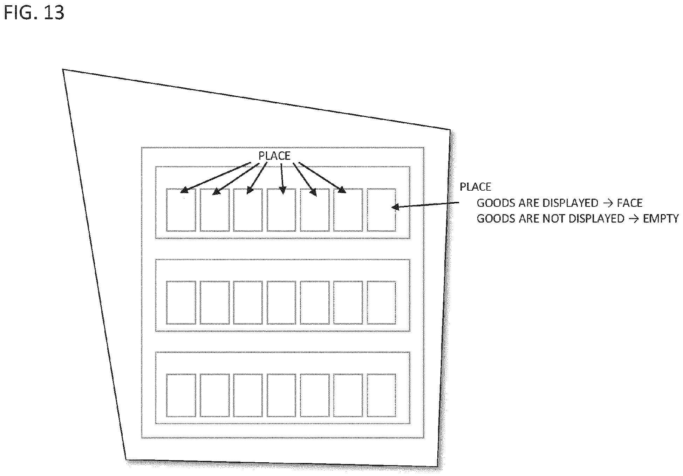

The goods identification information storage unit 27 stores information indicating the goods identification information of the goods displayed in each place on each shelf of the display shelf. For example, the information indicating the goods identification information is stored in the goods identification information storage unit 27, in association with the imaged date and time information, the store information, the image information identification information of the captured image information, the image identification information of the correct placement image information, and the place identification information for identifying the place. FIG. 13 schematically illustrates a relationship between a place and a face in the display shelf.

The correspondence relationship determination processing unit 28 determines a correspondence relationship between the goods type of the goods displayed in each place on each shelf of the display shelf and the product tag. In a case where identical goods are displayed side by side in each place, those goods will be collectively referred to as a goods type. Therefore, in a case where the goods are displayed only in one place, such goods have one goods type and one piece of goods identification information. In addition, in a case where the goods are displayed continuously in two places in a lateral direction, the goods types of the two places are integrated into one. Note that regarding the specification of the goods type, the processing can be performed, if it is after the recognition of the goods identification information. Therefore, in the processing before the processing by the correspondence relationship determination processing unit 28, for example, after the goods identification information is specified by the goods identification information specification processing unit 243 of the displayed goods recognition processing unit 24 and the in-product tag information specification processing unit 254 of the product tag recognition processing unit 25, the specification of the goods type may be conducted.

For example, the correspondence relationship determination processing unit 28 performs first processing, and second or subsequent processing separately.

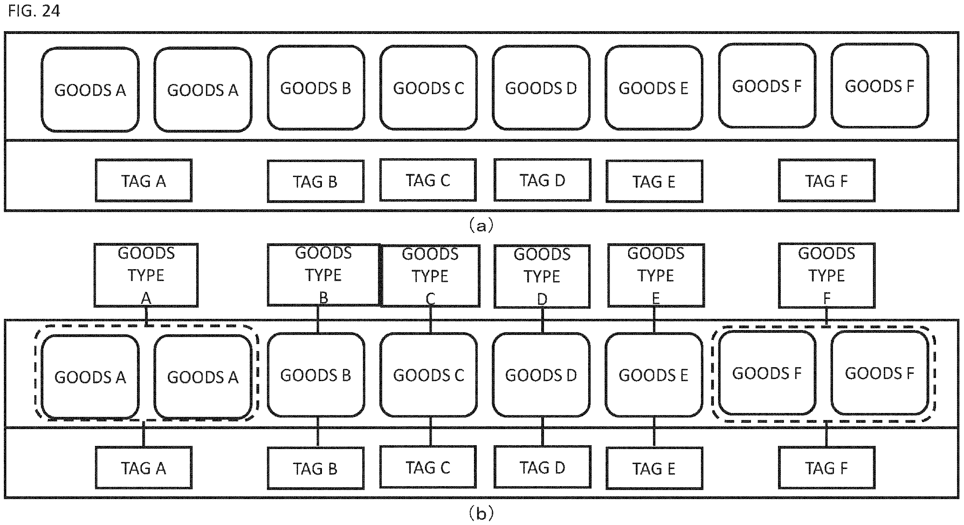

The first processing by the correspondence relationship determination processing unit 28 can be performed as follows. First, in an area to be a processing target, for example, in each shelf area to be the processing target, the number of the goods types is compared with the number of the product tags. In this situation, regarding the number of the goods types, a place stored as "empty" in the goods identification information storage unit 27 may also be counted as one goods type. In a case where the number of the goods types and the number of the product tags are equal to each other, the goods types and the product tags are associated on a one-to-one basis in a predetermined direction, for example, sequentially from the left side. FIGS. 24A and 24B schematically illustrate this processing. FIG. 24A is a diagram illustrating the goods identification information that has been recognized by the displayed goods recognition processing unit 24 and the goods identification information that has been recognized by the product tag recognition processing unit 25 in a certain shelf area, and FIG. 24B is a diagram illustrating a state in which the goods type of the displayed goods and the goods identification information of the product tag are associated with each other, based on FIG. 24A.

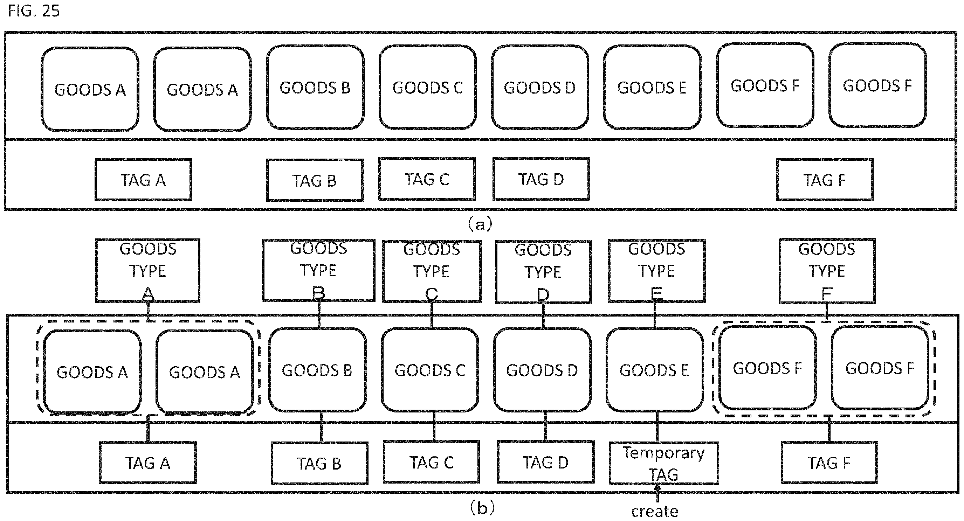

In addition, in a case where the number of the goods types is greater than the number of the product tags, a temporary product tag is created so that the number of the goods types and the number of the product tags are equal to each other, and is arranged in the product tag arrangement area. In this case, a given notification may be provided for an operator so as to create the temporary product tag, or after the OCR recognition is conducted on the information of the goods type and the information of the product tag and the corresponding goods type and product tag are associated with each other, a temporary product tag may be automatically created in a position of the product tag arrangement area corresponding to a remaining goods type (for example, in a position of the product tag arrangement area on a lower side or an upper side of the goods type). FIGS. 25A and 25B schematically illustrate this processing. FIG. 25A is a diagram illustrating the goods identification information that has been recognized by the displayed goods recognition processing unit 24 and the goods identification information that has been recognized by the product tag recognition processing unit 25 in a certain shelf area, and FIG. 25B is a diagram illustrating a state in which a temporary product tag is created and arranged on the product tag arrangement area, based on FIG. 25A, and the goods type of the displayed goods and the goods identification information of the product tag are associated with each other. The operator inputs the goods identification information and the like of the temporary product tag, and then the temporary product tag is registered as an official product tag.

In order to automatically create the temporary product tag, first, a range in which the temporary product tag having a predetermined size can be arranged is specified in the product tag arrangement area. Then, the information of the goods type is compared with the information of the product tag, an identical or similar pair is associated with each other, and the goods type that cannot be associated is specified. Then, for the goods type that cannot be specified, a temporary product tag is created in a range in which the specified temporary product tag can be arranged in the product tag arrangement area corresponding to the goods type (for example, an upper side or a lower side of the product tag arrangement area). In a case where a predetermined condition is satisfied, such as a case where there is no range in which the specified temporary product tag can be arranged, a case where a difference between the number of the goods types and the number of the product tags is two or more, or the like, an error may be notified to prompt the operator to make an input.

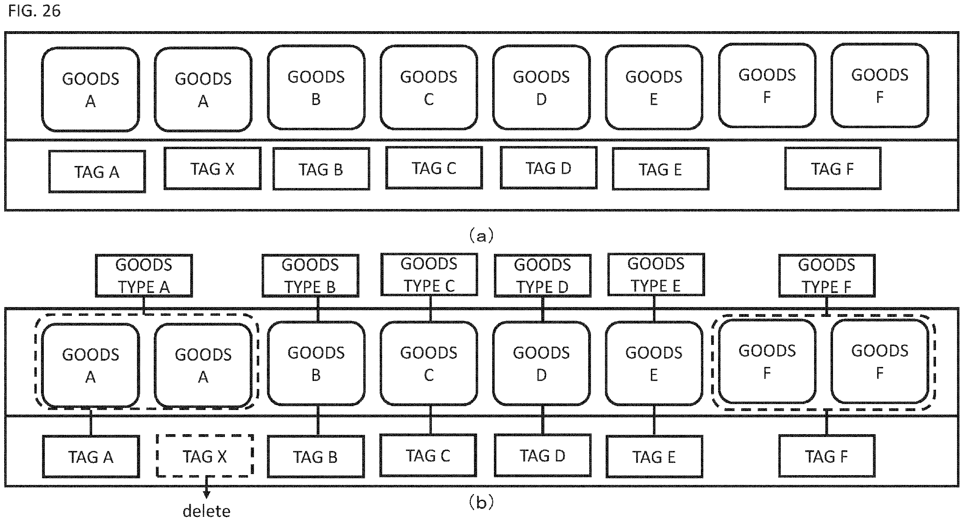

Furthermore, in a case where the number of the goods types is smaller than the number of the product tags, an unnecessary product tag is deleted so that the number of the goods types and the number of the product tags are equal to each other. In this case, a given notification may be provided for the operator so as to delete the product tag, or after the OCR recognition is conducted on the information of the goods type and the information of the product tag to associate the corresponding goods type with product tag, an unassociated product tag may be automatically deleted. FIGS. 26A and 26B schematically illustrate this processing. FIG. 26A is a diagram illustrating the goods identification information that has been recognized by the displayed goods recognition processing unit 24 and the goods identification information that has been recognized by the product tag recognition processing unit 25 in a certain shelf area, and FIG. 26B is a diagram illustrating a state in which an unnecessary product tag is deleted, based on FIG. 26A, and the goods type of the displayed goods and the goods identification information of the product tag are associated with each other.

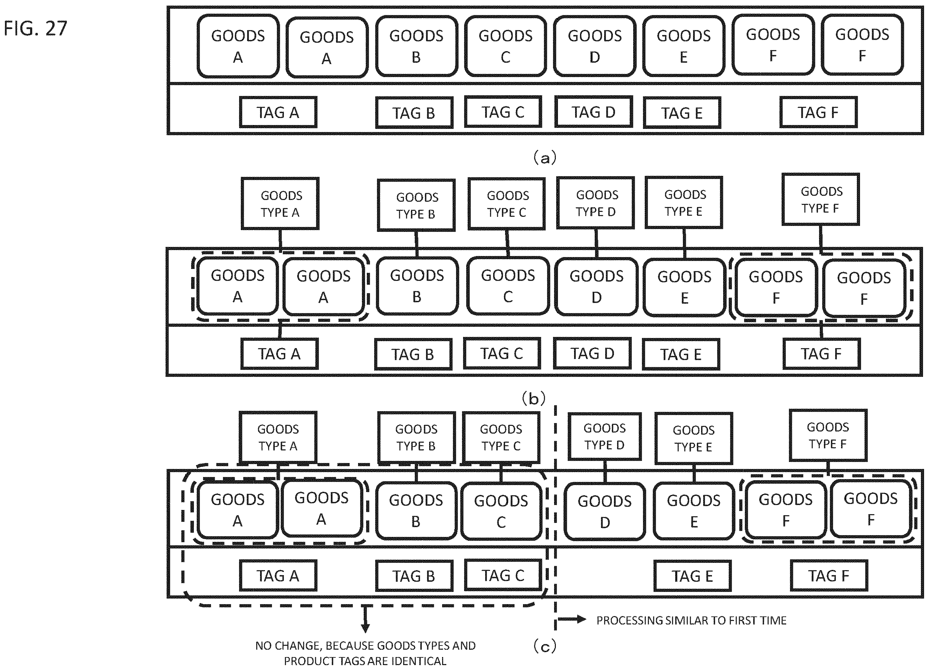

The second or subsequent processing by the correspondence relationship determination processing unit 28 can be performed as follows. First, sequentially from an initial position of an area to be a processing target, for example, sequentially from a left end of each shelf area, a combination of the goods type and the product tag is associated with a combination of them before the current processing, for example, in the previous processing, to be identical to each other within an identical range to the combination of them before the current processing. Then, a separation is set in a position where the combination of the goods type and the product tag differs, and processing similar to the above-described first processing is performed from a separation position. FIGS. 27A to 27C schematically illustrate this processing. FIG. 27A is a diagram illustrating the goods identification information that has been recognized by the displayed goods recognition processing unit 24 and the goods identification information that has been recognized by the product tag recognition processing unit 25 for a first time in a certain shelf area, and FIG. 27B is a diagram illustrating a state in which the goods type of the displayed goods and the goods identification information of the product tag are associated with each other, based on FIG. 27A. FIG. 27C is a diagram illustrating the goods identification information that has been recognized by the displayed goods recognition processing unit 24 and the goods identification information that has been recognized by the product tag recognition processing unit 25, as second processing. In FIG. 27C, the processing up to a goods type C is similar to the first processing. Therefore, a separation is set next to the goods type C, and then processing similar to the first processing is performed from a goods type D.

Note that the first processing is not limited to the processing actually performed for the first time, and includes a case where a correspondence relationship between the goods type of the displayed goods and the product tag is set via the operator or the like at an optional timing, and also includes a case where after the processing has been actually performed, for example, 10 times, the first processing is performed again so as to keep the accuracy constant. The second or subsequent processing denotes a case where the first processing is not performed.

The correspondence relationship determination processing unit 28 determines the correspondence relationship between the goods type and the product tag as described above, and stores the correspondence relationship between the goods type and the product tag in a predetermined storage area.

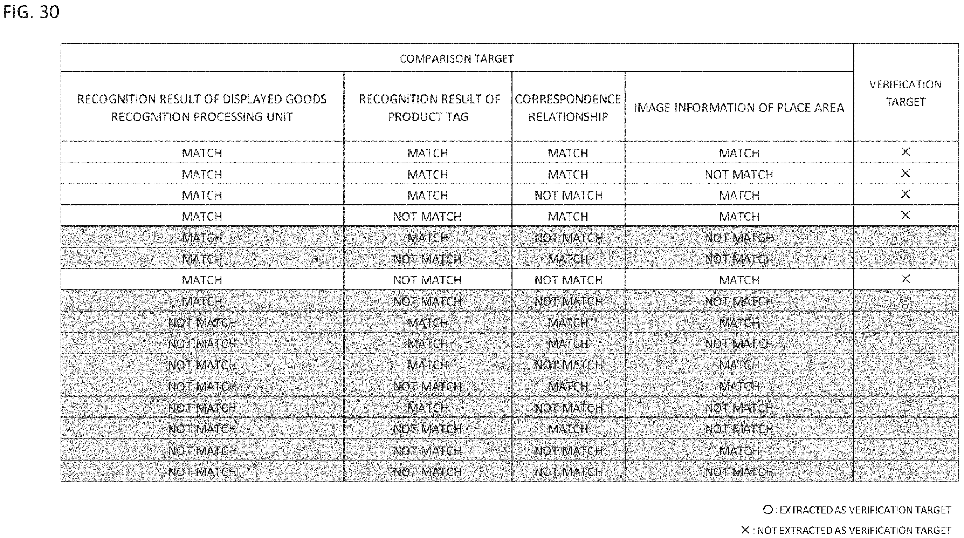

The verification target extraction processing unit 29 extracts, as a verification target, a recognition result that satisfies a predetermined condition, with regard to the recognition result of the goods identification information of the place that has been recognized by the displayed goods recognition processing unit 24. FIG. 30 illustrates an example of the condition for extracting a recognition result to be a verification target by the verification target extraction processing unit 29.

The verification target extraction processing unit 29 determines whether the goods identification information or the goods type in the place that has been recognized by the displayed goods recognition processing unit 24 and that is a processing target is identical to the goods identification information or the goods type that has been recognized by the displayed goods recognition processing unit 24 before the current processing, for example, in the previous processing. In a case where they are not identical to each other, the verification target extraction processing unit 29 extracts the recognition result as the verification target.

In addition, in a case of determining that they are identical to each other as described above, the verification target extraction processing unit 29 is capable of extracting the recognition result as the verification target, in a case where there is a change in one or more of three elements: between the recognition result that has been recognized by the product tag recognition processing unit 25 in the current processing and the recognition result that has been recognized by the product tag recognition processing unit 25 before the current processing, for example, in the previous processing; between the correspondence relationship between the goods type of the displayed goods and the product tag that has been determined by the correspondence relationship determination processing unit 28 in the current processing and the correspondence relationship between the goods type of the displayed goods and the product tag that has been determined by the correspondence relationship determination processing unit 28 before the current processing, for example, in the previous processing; and between the image information of the place area in the current processing and the image information of the corresponding place area before the current processing, for example, in the previous processing.

The following cases may be more preferably extracted as the verification target.

That is, in a case where there is a change between the correspondence relationship between the goods type of the displayed goods and the product tag that has been determined by the correspondence relationship determination processing unit 28 in the current processing and the correspondence relationship between the goods type of the displayed goods and the product tag that has been determined by the correspondence relationship determination processing unit 28 before the current processing, for example, in the previous processing, and in a case where there is a change between the image information of the place area to be a processing target in the current processing and the image information of the corresponding place area before the current processing, for example, in the previous processing, the recognition result is extracted as the verification target.

In addition, in a case where there is a change between the recognition result that has been recognized by the product tag recognition processing unit 25 in the current processing and the recognition result that has been recognized by the product tag recognition processing unit 25 before the current processing, for example, in the previous processing, and in a case where there is a change between the image information of the place area to be a processing target in the current processing and the image information of the corresponding place area before the current processing, for example, in the previous processing, the recognition result is extracted as the verification target.

In addition, in a case where there is a change in all the above three elements, the recognition result is extracted as the verification target.

Then, in the other cases, it may be configured such that the recognition result is not extracted as the verification target.

Note that whether the predetermined condition is satisfied is not limited to them, and may be optionally set as long as the above element is used.

The recognition result that is to be used as a comparison target and that has been recognized by the product tag recognition processing unit 25 may be the goods identification information, or the price may be used.

Whether there is a change in the image information of the goods in the place to be a processing target is determined by comparing the similarity degree between the image information of the goods in the place to be a processing target in the current processing and the image information of the goods in the corresponding place before the current processing, for example, in the previous processing. In a case where the similarity degree is equal to or greater than a certain threshold value (or greater than a threshold value), it is determined that there is no change, and in a case where the similarity degree is smaller than the threshold value (or equal to or smaller than the threshold value), it is determined that there is a change. In addition, as another method, the presence or absence of a change may be determined by use of the deep learning. In this case, the image information of the goods in the place in the current processing and the image information of the goods in the corresponding place before the current processing, for example, in the previous processing may be input into the learning model in which the weighting coefficients between neurons of the respective layers of the neural network including a large number of intermediate layers are optimized, so that the presence or absence of the change may be determined, based on an output value indicating the similarity degree. As the learning model, it is possible to use the image information of the goods in two places and information indicating whether the goods having different types of outer packing having been given as correct answer data.

In comparing the goods identification information or the goods type in the place that is to be a processing target and that has been recognized by the displayed goods recognition processing unit 24 with the goods identification information or the goods type that has been recognized by the displayed goods recognition processing unit 24 before the current processing, for example, in the previous processing, in a case where the goods identification information in the previous processing is registered as "empty" or "out of stock", the comparison is desirably conducted by use of the goods identification information or the goods type that has been recognized by the displayed goods recognition processing unit 24 in the processing one time before the previous processing, that is, in the processing two times before.

Similarly, in comparing the image information of the place area of the current time with the image information of the corresponding place area before the current processing, for example, in the previous processing, in a case where there is no image information of the corresponding place in the previous processing, or "empty" or "out of stock" is registered as the goods identification information of the place, the comparison is desirably conducted by use of the image information of the corresponding place area in processing one time before the previous processing, that is, in processing two times before.

When the verification target extraction processing unit 29 extracts the goods as a verification target, the verification target extraction processing unit 29 notifies that the goods is a verification target, by displaying such a place area in the image information in a highlighted manner, displaying a recognition result in a highlighted manner, or the like.

Note that in the processing of extracting the verification target by the verification target extraction processing unit 29, it is not necessary to provide processing for an element that is not used as a condition for extracting the verification target, and it is sufficient if the information processing system 1 includes the processing for an element to be used as the condition for extracting the verification target.

### First Embodiment

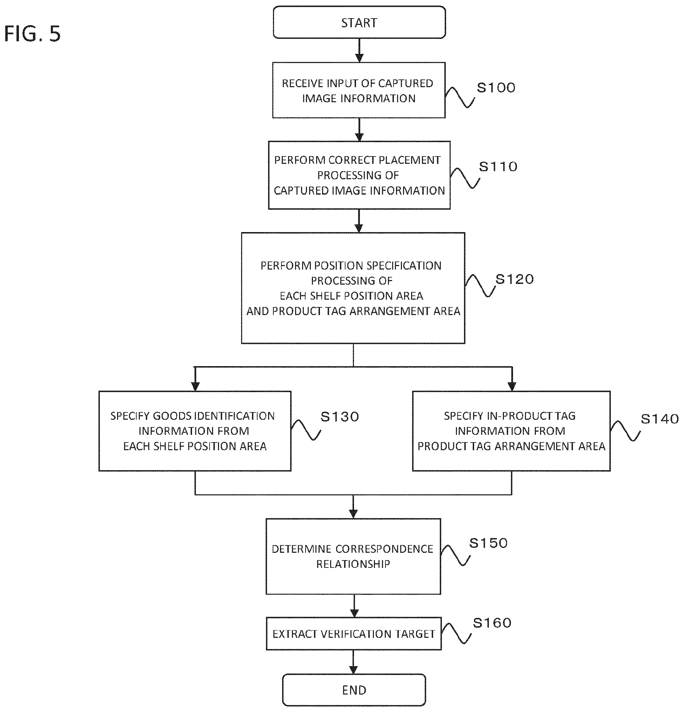

Next, an example of processing of the information processing system 1 in the present invention will be described with reference to a flowchart of FIG. 5. Note that in the following description, a case where the goods identification information of the displayed goods and the goods identification information of the product tag are specified from the captured image information will be described.

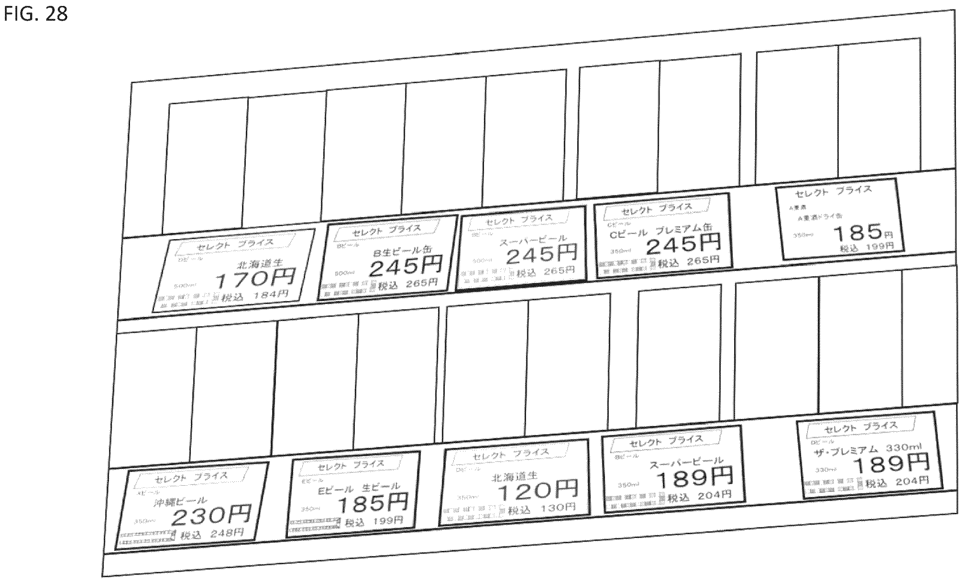

The captured image information obtained by imaging a display shelf in a store is input from the captured image information input terminal 3, and the input is received by the captured image information input receipt processing unit 20 of the management terminal 2 (S100). FIG. 28 illustrates an example of the captured image information. In addition, inputs of the imaged date and time, the store identification information, and the image information identification information of the captured image information are received. Then, the captured image information input receipt processing unit 20 stores the captured image information, the imaged date and time, the store identification information, and the image information identification information of the captured image information, the inputs of which have been received, in the captured image information storage unit 21 in association with one another.

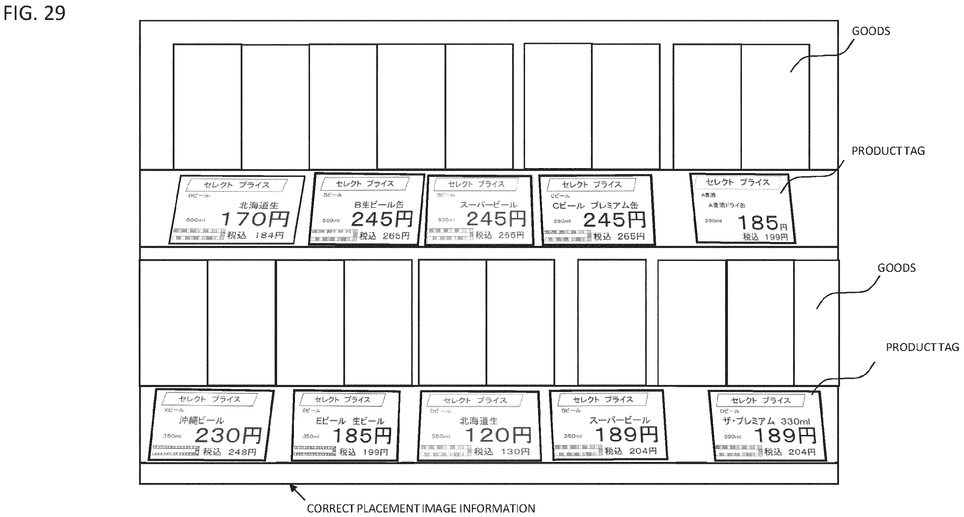

When the management terminal 2 receives a predetermined operation input, the captured image information correct placement processing unit 22 extracts the captured image information stored in the captured image information storage unit 21, receives inputs of four points of shelf positions (positions of a display shelf) that are vertexes used for performing the correct placement processing such as the trapezoid correction processing, and performs the correct placement processing (S110). FIG. 29 illustrates an example of the captured image information (correct placement image information) that has been subjected to the correct placement processing.

Then, when the management terminal 2 receives a predetermined operation input for the correct placement image information, the position specification processing unit 23 specifies each shelf position area and a product tag arrangement area (S120). That is, the inputs of each shelf area and the product tag arrangement area in the correct placement image information are received. FIG. 10 is a diagram illustrating a state in which each shelf area and the product tag arrangement area are specified.

When each shelf area and the product tag arrangement area are specified as described above, the displayed goods recognition processing unit 24 performs recognition processing of the displayed goods in each shelf area, and the product tag recognition processing unit 25 performs product tag recognition processing of the product tag arrangement area (S130, S140). Note that the recognition processing of the displayed goods by the displayed goods recognition processing unit 24 and the product tag recognition processing by the product tag recognition processing unit 25 may be performed in parallel with each other or at different timings.

First, the recognition processing of the goods identification information of the goods by the displayed goods recognition processing unit 24 will be described.

The each shelf area processing unit 241 in the displayed goods recognition processing unit 24 cuts out the image information of each shelf area from the correct placement image information, based on the area of each shelf, the input of which has been received in S120. Then, processing of specifying a place is performed on every shelf in the each shelf area image information. Specifically, regarding each shelf in each shelf area, the place is specified by specifying a narrow shadow generated between the goods within a range of a rectangular area constituted of coordinates of four points, specifying a repeated pattern of an image, specifying a step on an upper side of a package, specifying a separation position based on a restriction such as an identical goods width, and the like. The place identification information for identifying the place is applied to the place that has been specified. Then, the coordinates of each place that have been specified are stored in association with the imaged date and time, the store identification information, the image information identification information of the captured image information, the image information identification information of the correct placement image information, and the place identification information for identifying the place. Note that regarding the coordinates of the place, instead of storing the four points, two points capable of specifying the rectangular area may be stored.

When each place on each shelf in the each shelf position area image information of the correct placement image information is specified as described above, the goods identification information specification processing unit 243 performs matching processing with the sample information stored in the sample information storage unit 26 for every place, and specifies the goods identification information of the goods displayed in the place. That is, each image feature quantity is calculated from the image information in the rectangular area of the place on a certain each shelf (the place identification information of the area of this place is defined as X) and each piece of the sample information stored in the sample information storage unit 26, and the similarity degree is determined by obtaining a pair of feature points. Then, the sample information having the highest similarity is specified. In a case where the similarity at that time is equal to or greater than a predetermined threshold value, the goods identification information corresponding to the sample information is specified, based on the sample information storage unit 26. Then, the goods identification information that has been specified is used as the goods identification information of the goods displayed in the place of place identification information X. Note that information indicating "empty" is applied to the place identification information of the place that has been determined not to be similar to any piece of the sample information. The goods identification information specification processing unit 243 stores the goods identification information that has been specified or the information indicating "empty" in the goods identification information storage unit 27 in association with the imaged date and time, the store identification information, the image information identification information of the captured image information, the image information identification information of the correct placement image information, and the place identification information.

Note that it is not always possible to specify the goods identification information of all the places. Hence, for the place that cannot be specified, instead of applying the information "empty" from the beginning as described above, an input of the goods identification information is received. The goods identification information, the input of which has been received, is stored in the goods identification information storage unit 27 in association with the imaged date and time, the store identification information, the image information identification information of the captured image information, the image information identification information of the correct placement image information, and the place identification information. In addition, similarly, an input may be received for the correction processing of the goods identification information that has been specified. Further, as a result of the correction processing, in a case where an input of "empty" is received, information of "empty" may be applied. Note that in the case of "empty", for such a place, information indicating the goods being "out of stock" may be stored in the goods identification information storage unit 27.

By performing the processing as described above, it is possible to specify the goods identification information of the goods displayed on each shelf of the display shelf that appears in the captured image information.

Note that the recognition processing of the goods identification information of the goods by the displayed goods recognition processing unit 24 is not limited to the above description. For example, the deep learning may be used as having already been described above.

Next, processing of recognizing the information of the product tag by the product tag recognition processing unit 25 will be described.

The product tag arrangement area processing unit 251 of the product tag recognition processing unit 25 cuts out the image information of the product tag arrangement area specified in S120, and the product tag arrangement area correct placement processing unit 252 performs the trapezoid correction processing so as to perform the correct placement processing on the image information of the product tag arrangement area.

As the correct placement processing on the image information of the product tag arrangement area, first, edge detection is conducted on the image information of the product tag arrangement area. Then, from the detected edges, a contour line that is equal to or longer than a certain length and that falls within a predetermined angle range from the vertical is specified. Then, from the specified contour lines, leftmost and rightmost contour lines are specified. FIGS. 15A and 15B illustrate examples of the contour lines specified in this manner. Then, the trapezoid correction processing is performed on the image information of the product tag arrangement area so that the specified contour lines (L1 and L2 in FIG. 15A and L3 and L4 in FIG. 15B) respectively become vertical lines. By performing such processing, the image information of the product tag arrangement area has been subjected to the correct placement, and thus the image information of the product tag arrangement area that has been subjected to the correct placement illustrated in FIGS. 14A and 14B can be obtained.

When the correct placement processing on the image information of the product tag arrangement area ends, the product tag specification processing unit 253 specifies individual product tag areas from the image information of the product tag arrangement area, in the first method to the third method.

In the case where the first method is used, a histogram in which the brightness information of the image information from the image information of the product tag arrangement area that has been subjected to the correct placement is laterally integrated is generated, and the rise-up and fall-down positions of the histogram are specified. Then, the specified rise-up position of the histogram is specified as the upper side position A of the product tag, and the fall-down position of the histogram is specified as the lower side position B of the product tag.

Next, from the image information of the product tag arrangement area that has been subjected to the correct placement, a part between the upper side position A and the lower side position B is cut out, and a histogram in which the brightness information in the image information of the product tag arrangement area that has been subjected to the correct placement is laterally integrated is generated.

The rise-up positions U and the fall-down positions D are specified in the generated histogram, and the rise-up position U (left side position) and the fall-down position D (right side position) that is present on the right side of the rise-up position U and within a predetermined distance range are specified as a pair to be specified as a product tag area.

In a case where there is no product tag area within a predetermined distance, the product tag area is specified on the right side of the rise-up position U with which a pair cannot be formed, and on the left side of the fall-down position D with which a pair cannot be formed.

By the processing as described above, states in which the respective product tag areas are specified are illustrated in FIGS. 18A and 18B.

In addition, in the case where the second method is used, the product tag specification processing unit 253 specifies the product tag area by performing image matching processing between the image information of the product tag of the template registered beforehand and the image information of the product tag arrangement area that has been subjected to the correct placement.

Furthermore, in the case where the third method is used, the product tag area is specified by use of the deep learning. In this case, the deep learning is performed by use of the learning model in which the product tag area is given, as correct answer data, to the image information of various product tag arrangement areas. For example, the product tag specification processing unit 253 inputs image information of the product tag arrangement area that has been subjected to the correct placement, into the learning model in which the weighting coefficients between neurons of the respective layers of the neural network including a large number of intermediate layers are optimized, and specifies the product tag area, based on its output value.

When the product tag specification processing unit 253 specifies the product tag area as described above, the in-product tag information specification processing unit 254 specifies the information in the product tag.

In the first method by the in-product tag information specification processing unit 254, binarization processing is performed on the specified product tag area to create binarized image information. Then, a box is specified by labeling processing on the binarized image information. Note that the island that does not satisfy the predetermined threshold height or width is regarded as noise not to generate the box, and is removed from the processing target without change.

Then, the height, the width, and the baseline of the generated box are obtained. Adjacent boxes having the same baselines and heights within a predetermined range and having the heights and the widths that fall within a certain threshold range are specified, and the specified boxes are merged to constitute a block. Then, out of the blocks, a block that is the highest in height is estimated as a price area (tax-exclusive price area), and the OCR recognition is conducted. As a result of the OCR recognition, in a case where the price information cannot be obtained (in a case where a character string of numerical values cannot be recognized), the block that is the second highest in height is estimated as the price area (tax-exclusive price area), and the OCR recognition is similarly conducted.

Note that in the OCR recognition described above, it is possible to improve the accuracy in reading the price, by adding recognition of characters that constitute a price display such as "numerals" and "comma" used in the price, as a restriction condition.

As described above, when the price information is acquired from the block that has been estimated to be the price area (tax-exclusive price area) by the OCR recognition, a block other than the price information that has been acquired by estimating to be the price area (tax-exclusive price area) is specified, and the OCR recognition is conducted on each specified block. In this OCR recognition, two types of OCR recognition processing are preferably conducted. That is, standard OCR recognition processing that is usually conducted and OCR recognition processing in which recognition of characters that constitute the price display is added as a restriction condition.

The block that has been specified as described above includes a block of the price area (tax-inclusive price area) and a block of an area for the goods identification information such as the manufacturer name, the name of the goods, and the information of the rated specification or the like. Then, two types of OCR recognition processing are performed on each block. Regarding the block of an area of the goods identification information such as the manufacturer name and the name of the goods, and the information of the rated specification or the like, a character string is recognized in the standard OCR recognition processing, and a character string results in including an error in the OCR recognition processing to which the restriction condition is added. In this case, it is determined whether the recognition results of the two types of the recognition processing are different from each other by a predetermined value or more. In a case where the recognition results are different from each other, the character string that has been subjected to the standard OCR recognition processing is regarded as the recognition result, and it is determined that the block is other than the block of the price area (tax-inclusive price area). On the other hand, for the block of the price area (tax-inclusive price area), the character string of the price information is recognized in the standard OCR recognition processing, and the character string of the price information is recognized also in the OCR recognition processing to which the restriction condition is added. In this case, it is determined whether the recognition results of the two types of recognition processing are different from each other by a predetermined value or more. In a case where the recognition results are not different, it is determined to be a block of the price area (tax-inclusive price area), and the character string that has been recognized by the recognition processing to which the restriction condition is added is determined to be the price information of the recognition result.

As described above, the in-product tag information specification processing unit 254 is capable of conducting character recognition of the information written in the product tag. In order to determine a displayed situation of the goods, it is sufficient if there is the goods identification information of the goods. However, by recognizing another piece of information such as the tax-exclusive price or the tax-inclusive price, it becomes possible to manage also the price information and the like in association with the displayed situation.

Note that in the case where the second method is used by the product tag specification processing unit 253, the positions and sizes of character frames, in which the goods identification information such as the tax-exclusive price, the tax-inclusive price, the manufacturer name, and the name of the goods, and the rated specification are respectively written, are set beforehand as the template of the product tag. Therefore, it is sufficient if the image information of the corresponding part is cut out from the product tag area that has been specified by the product tag specification processing unit 253, and the OCR recognition processing is performed.

In addition, in the case where the third method is used by the product tag specification processing unit 253, processing by the deep learning is performed by use of the learning model that has performed the learning with the information of the goods identification information such as the tax-exclusive price, the tax-inclusive price, the manufacturer name, and the name of the goods, and information of the rated specification or the like to be given as correct answer data to the image information of various product tag areas. The in-product tag information specification processing unit 254 inputs the image information of the product tag area into the learning model in which the weighting coefficients between neurons of the respective layers of the neural network including a large number of intermediate layers are optimized, and specifies the information of the goods identification information such as the tax-exclusive price, the tax-inclusive price, the manufacturer name, and the name of the goods, and information of the rated specification or the like included in the product tag area, based on its output value.

Then, the in-product tag information specification processing unit 254 performs dictionary collation processing with the specified name of the goods or the like. That is, an editing distance between the character string that has been read and the goods identification information such as each name of the goods in the goods dictionary is obtained, the goods identification information such as the name of the goods having a minimum editing distance is specified. In a case where it falls within a predetermined distance, it is identified as the goods identification information such as the name of the goods. Then, a goods name part having a shortest editing distance is removed from the character string that has been read, and the editing distance to each rated specification in the rated specification dictionary is obtained for a remaining partial character string. It is determined whether the minimum editing distance falls within a predetermined distance. In a case where the minimum editing distance falls within the predetermined distance, such a part is identified as a character string of the rated specification. Similarly, a goods name part having a minimum editing distance and a rated specification part are removed from the character string that has been read, an editing distance to each manufacturer name in the manufacturer name dictionary is obtained for a remaining partial character string. It is determined whether the minimum editing distance falls within a predetermined distance. In a case where the minimum editing distance falls within the predetermined distance, such a part is identified as a character string of the manufacturer name. Note that in a case where the Jaro-winkler distance is used instead of the editing distance, it is sufficient to perform processing corresponding to it appropriately.

Furthermore, the in-product tag information specification processing unit 254 performs logical check processing on the character string that has been subjected to the character recognition. That is, it is determined whether the character string that has been subjected to the character recognition is logically inconsistent.

As a result of the logical check, in a case where there is no contradiction, the goods identification information such as the tax-exclusive price, the tax-inclusive price, and the name of the goods, the manufacturer name, and the rated specification are specified for each character string that has been recognized. They are stored in a predetermined storage area in association with the imaged date and time, the store identification information, and the image information identification information of the captured image information, and are then output. For example, an output is made in a table format.

As described above, after the displayed goods recognition processing unit 24 recognizes the goods identification information of the goods displayed on each shelf and the product tag recognition processing unit 25 recognizes the goods identification information of the product tag, the correspondence relationship determination processing unit 28 determines a correspondence relationship between the goods type of the goods displayed on each shelf and the product tag (S150).

Regarding the goods identification information of the goods displayed on the display shelf, in a case where goods having identical goods identification information are displayed continuously in a plurality of places in a predetermined direction, the correspondence relationship determination processing unit 28 combines those places as one goods type.

Then, in a case where the processing is first processing, the correspondence relationship determination processing unit 28 compares the number of the goods types with the number of the product tags in an each shelf area to be a processing target, and associates the goods types with the product tags on a one-to-one basis sequentially from the left side, in a case where the numbers are equal to each other (FIGS. 24A and 24B). In addition, in a case where the number of the goods types is greater than the number of the product tags, a temporary product tag is created and arranged in the product tag arrangement area, so that the number of the goods types and the number of the product tags are equal to each other (FIGS. 25A and 25B). Furthermore, in a case where the number of the goods types is smaller than the number of the product tags, an unnecessary product tag is deleted, so that the number of the goods types and the number of the product tags are equal to each other (FIGS. 26A and 26B).

Further, in a case where the processing is second or subsequent processing, the correspondence relationship determination processing unit 28 associates, sequentially from a left end of each shelf area, a combination of the goods type and the product tag with a combination of them before the current processing, for example, in the previous processing, to be identical to each other within an identical range to the combination of them before the current processing. Then, a separation is set in a position where the combination of the goods type and the product tag differs, and processing similar to the above-described first processing is performed from such a separation position (FIGS.27A to 27C).

By performing the processing as described above, it becomes possible to associate the correspondence relationship between the goods displayed on the display shelf and the product tag.

Then, the verification target extraction processing unit 29 determines whether to extract as a verification target with regard to every place to be a processing target (S160).

As such processing, first, it is determined whether the goods identification information or the goods type that has been recognized in the current processing by the displayed goods recognition processing unit 24 and the goods identification information or the goods type that has been recognized in the previous processing by the displayed goods recognition processing unit 24 are identical to each other with regard to every place to be a processing target. Then, in a case where they are not identical to each other, the goods identification information or the goods type, which is a recognition result in the current processing by the displayed goods recognition processing unit 24, is extracted as the verification target.

In addition, the goods identification information or the goods type that is a recognition result in the current processing by the displayed goods recognition processing unit 24 is extracted as the verification target, in a case where it is determined that the goods identification information or the goods type that has been recognized in the current processing by the displayed goods recognition processing unit 24 and the goods identification information or the goods type that has been recognized in the previous processing by the displayed goods recognition processing unit 24 are identical to each other, there is a change between the correspondence relationship between the goods type of the displayed goods and the product tag that has been determined in the current processing by the correspondence relationship determination processing unit 28 and the correspondence relationship between the goods type of the displayed goods and the product tag that has been determined in the previous processing by the correspondence relationship determination processing unit 28, and there is a change between the image information of the place area in the current processing to be a processing target and the image information of the corresponding place area in the previous processing.

Furthermore, the goods identification information or the goods type that is a recognition result in the current processing by the displayed goods recognition processing unit 24 is extracted as the verification target, in a case where it is determined that the goods identification information or the goods type that has been recognized in the current processing by the displayed goods recognition processing unit 24 and the goods identification information or the goods type that has been recognized in the previous processing by the displayed goods recognition processing unit 24 are identical to each other, there is a change between the recognition result that has been recognized in the current processing by the product tag recognition processing unit 25 and the recognition result that has been recognized in the previous processing by the product tag recognition processing unit 25, and there is a change between the image information of the place area in the current processing to be a processing target and the image information of the corresponding place area in the previous processing.

In addition, the goods identification information or the goods type that is the recognition result in the current processing by the displayed goods recognition processing unit 24 is extracted as the verification target, in a case where it is determined that the goods identification information or the goods type that has been recognized in the current processing by the displayed goods recognition processing unit 24 and the goods identification information or the goods type that has been recognized in the previous processing by the displayed goods recognition processing unit 24 are identical to each other, and there are changes (not identical) respectively between a recognition result that has been recognized in the current processing by the product tag recognition processing unit 25 and a recognition result that has been recognized in the previous processing by the product tag recognition processing unit 25, between a correspondence relationship between the goods type of the displayed goods and the product tag that has been determined in the current processing by the correspondence relationship determination processing unit 28 and a correspondence relationship between the goods type of the displayed goods and the product tag that has been determined in the previous processing by the correspondence relationship determination processing unit 28, and between the image information of the place area in the current processing and the image information of the corresponding place area in the previous processing.

Regarding the recognition result that has been extracted as the verification target, the area of the place or the goods is extracted as the verification target, and the area of the place is displayed in a highlighted manner in the image information or the recognition result is displayed in a highlighted manner so as to notify the verification target.

### Second Embodiment

Furthermore, a modification of the specification processing by the place specification processing unit 242 in the first embodiment will be described. In the present embodiment, the processing of specifying the place in the first embodiment is set as the first processing, and processing of automatically specifying the place may be performed as the second or subsequent processing of specifying the place. The processing in this case will be described.

Note that the first processing includes not only the processing for the first time but also a case where the processing in the first embodiment is performed at an optional timing in order to correct a deviation that occurs at the time of automatically specifying. The second or subsequent processing denotes processing performed at any time other than the first time. In addition, in the second or subsequent processing, regarding the captured image information and the correct placement image information obtained by imaging an identical display shelf at an identical opportunity, a case of performing processing on the captured image information and the correct placement image information obtained by imaging at different angles is included.

The place specification processing unit 242 performs processing similar to the processing in the first embodiment, as the first place specification processing. Then, in the second or subsequent place specification processing by the place specification processing unit 242, regarding the identical each shelf of the identical display shelf, the coordinates of the area of the place that have been specified in the previous processing (N-1'th times) of the correct placement image information are extracted, and the extracted coordinates are set to coordinates of the area of the place that have been specified in the current processing (N'th times) of the correct placement image information.

Similarly to the coordinates of the position of each shelf, the coordinates of the area of the place denote relative coordinates with a predetermined position in the display shelf in the correct placement image information as a reference.

### Third Embodiment

Furthermore, as another modification of the first embodiment, as the processing, by the product tag specification processing unit 253, of specifying the goods identification information of the product tag displayed on every product tag arrangement area corresponding to each shelf of the display shelf, the processing in the first embodiment is set as the first specification processing, and the following processing is performed as the second or subsequent specification processing.

The product tag specification processing unit 253 specifies each product tag area from the product tag arrangement area image information that has been subjected to the correct placement image information in the N'th processing. Then, the in-product tag information specification processing unit 254 sequentially compares each product tag area that has been specified with the corresponding product tag area in the product tag arrangement area image information that has been subjected to the correct placement image information of the N-1'th times. For example, the similarity is determined by comparing the image information of a product tag area on a leftmost end that has been specified from the product tag arrangement area image information that has been subjected to the correct placement image information of the N'th times with the image information of the product tag area on the leftmost end that has been specified from the product tag arrangement area image information that has been subjected to the correct placement image information of the N-1'th times. Note that it is possible to specify the image information of the product tag area of the N-1'th times that corresponds to the image information of the product tag area of the N'th times, in various methods using, for example, a sequential order from a predetermined position in the product tag area, coordinate information of the image information of the product tag area approximate to the coordinate information of the image information of the product tag area of the N'th times, or the like.

In addition, regarding the determination of the similarity, in addition to the processing in the above-described respective embodiments, an EMD between signatures (aggregation of image feature quantities and weights) of the image information of each product tag area is calculated, and can be set as an index of the similarity. As the image feature quantity of the signature, for example, the frequency distribution of the image information of the product tag area in the HSV color space is obtained, and grouping is conducted for hue and saturation, so that the image feature quantity can be set with the number of features and the area in the HSV color space. The grouping for the hue and the saturation is conducted to reduce a dependence degree on the brightness so as not to be largely influenced by an imaging condition.

In addition, to accelerate the processing, it is possible to use a similarity such as an L2 distance between image feature quantities such as a color correlogram or a color histogram of the image information in an appropriate color space, instead of the signature and the EMD.

Furthermore, the similarity may be determined by use of the deep learning. That is, in this case, the image information of the product tag area of the N'th times and the image information of the corresponding product tag area of the N-1'th times may be input into the learning model in which the weighting coefficients between neurons of the respective layers of the neural network including a large number of intermediate layers are optimized, so that the similarity may be determined, based on its output value. As the learning model, it is possible to use a model in which the similarity degree of the image information between two product tag areas is given as correct answer data.

In a case where the similarity of the image information of the product tag area of the N'th times is equal to or greater than a certain threshold value, in-product tag information of the product tag area of the N-1'th times is extracted from the goods identification information storage unit 27, and is set as the in-product tag information of the product tag area of the N'th times. Accordingly, it is possible to specify the in-product tag information of the product tag area in the product tag arrangement area image information that is to be a processing target and that has been subjected to the correct placement in the N'th processing. In a case where the similarity is smaller than the certain threshold value, the processing by the in-product tag information specification processing unit 254 may be performed similarly to the first processing.

Note that in comparison with the image information of the product tag area in the product tag arrangement area image information that has been subjected to the correct placement image information of the N-1'th times, not only the comparison with the image information of the corresponding product tag area but also the image information of the product tag area in a predetermined range may be included as comparison targets. For example, in a case of comparing with the image information of a certain product tag area in the product tag arrangement area image information that has been subjected to the correct placement of the N'th times, the comparison target may include, in addition to the corresponding product tag area in the product tag arrangement area image information that has been subjected to the correct placement of the N-1'th times, a product tag area within a predetermined range from such an area, for example, a product tag area located in a position separated by one or more areas from such an area in a left-right direction.

In this case, the image information of the product tag area to be a processing target in the product tag arrangement area image information that has been subjected to the correct placement of the N'th times is compared with the image information of each product tag area in the range to be a comparison target in the product tag arrangement area image information that has been subjected to the correct placement of the N-1'th times, and the in-product tag information of the product tag area of the product tag arrangement area image information that has been subjected to the correct placement in the N-1'th times having the highest similarity is specified. Note that the similarity that is equal to or greater than a certain threshold value may be set as a condition. Then, the in-product tag information of the product tag area of the product tag arrangement area image information that has been subjected to the correct placement of the N-1'th times is extracted, and is set as the in-product tag information of the product tag area to be a processing target in the product tag arrangement area image information that has been subjected to the correct placement of the N'th times.

As a result of the comparison with the image information of the product tag arrangement area of the product tag arrangement area image information that has been subjected to the correct placement of the N-1'th times, in a case where a candidate for the in-product tag information cannot be specified because the similarity does not satisfy a threshold value or the like, similar processing to the first processing is performed on the image information of the product tag area to be a processing target in the product tag arrangement area image information that has been subjected to the correct placement of the N'th times.

As described above, the in-product tag information of the product tag area that has been specified is stored in the goods identification information storage unit 27 in association with the imaged date and time information, the store information, the image information identification information of the captured image information, the image identification information of the correct placement image information, and the identification information for identifying the product tag area.

### Fourth Embodiment

In the first to third embodiments, in each piece of the image information obtained by imaging an identical display shelf at an identical opportunity at different angles, the goods identification information in a place is specified, and the corresponding places are compared with each other to confirm the goods identification information in such a place. Hence, instead of specifying the goods identification information in the place for each piece of the image information obtained by imaging at different angles, it may be configured such that one piece of the image information is created by synthesizing in advance the pieces of the image information obtained by imaging at different angles and deleting a part where light or the like is reflected, and then the processing of specifying the goods identification information in the place is performed on such one piece of the image information.

### Fifth Embodiment

The processing of the above-described first to fourth embodiments can be appropriately combined. In addition, each type of the processing is not limited to the order described in the specification in the present invention, and can be appropriately changed within the scope of achieving the object. In addition, each type of the processing by the displayed goods recognition processing unit 24 and the product tag recognition processing unit 25 is performed on the correct placement image information that has been subjected to the correct placement processing on the captured image information, but may be performed on the captured image information. In this case, the correct placement image information may be replaced with the captured image information.

Furthermore, in the processing of the above-described first to fourth embodiments, the displayed goods recognition processing unit 24 specifies the identification information of the goods from the captured image information or the correct placement image information, and the product tag recognition processing unit 25 specifies the identification information of the goods. In addition to recognition of character information written in the product tag, the product tag recognition processing unit 25 may read coded information of the goods identification information provided in the product tag or in its vicinity, or may be configured to read the goods identification information from an IC tag or the like provided in the product tag or in its vicinity. That is, the product tag recognition processing unit 25 is not limited to the character recognition processing on the character written in the product tag, and the displayed goods recognition processing unit 24 may perform collation processing with the identification information of the goods by using the product tag or the goods identification information in the vicinity of the product tag.

Furthermore, the displayed goods recognition processing unit 24 may specify the goods displayed on the display shelf, based on the captured image information, and in addition, may specify the goods identification information of the goods displayed on the display shelf by reading an IC tag attached to the displayed goods to specify the identification information stored in such an IC tag. In a case where the displayed goods recognition processing unit 24 reads the goods identification information from the IC tag attached to the goods, and the product tag recognition processing unit 25 reads the goods identification information from the product tag or the IC tag installed in its vicinity, pieces of the goods identification information are respectively read from the IC tags. Therefore, in the IC tags, the goods identification information of the IC tag attached to the goods and the goods identification information of the IC tag attached to the product tag are preferably identifiable by a flag or the like.

### Sixth Embodiment

In the above-described first to fifth embodiments, a display shelf in a convenience store or a supermarket has been described as an example. However, without being limited thereto, the present invention is applicable to any genre as long as some type of goods are displayed on the display shelf and a tag is displayed in a position corresponding to the goods. For example, the present invention is also applicable to pharmaceutical products (goods) displayed on a display shelf (pharmaceutical shelf) on which pharmaceutical products of a dispensing pharmacy are displayed, and to labels (product tags) each indicating the name or the like of the pharmaceutical product displayed on the display shelf. Similarly, the present invention is also applicable to goods displayed on a display shelf in a warehouse and a product tag indicating the name or the like of the goods displayed on the display shelf.

The use of the information processing system 1 in the present invention enables extraction of a recognition result having a high possibility of necessitating the verification, with regard to the recognition result that has been recognized from image information.

## Claims

1. An information processing system comprising:
a displayed goods recognition processing unit configured to recognize information indicating goods, the goods appearing in image information obtained by imaging a display shelf; and
a verification target extraction processing unit configured to extract a recognition result to be a verification target out of the goods displayed on the display shelf, wherein
the verification target extraction processing unit
extracts the verification target by using a change in the information indicating the goods displayed on the display shelf that has been recognized from the image information.

2. The information processing system according to claim 1, wherein
the verification target extraction processing unit
compares either goods identification information or a goods type that has been recognized in current processing by the displayed goods recognition processing unit with either goods identification information or a goods type that has been recognized in processing before the current processing by the displayed goods recognition processing unit, and extracts the verification target.

3. The information processing system according to claim 1, wherein
the verification target extraction processing unit
compares either goods identification information or a goods type that has been recognized in current processing by the displayed goods recognition processing unit with either goods identification information or a goods type that has been recognized in processing before the current processing by the displayed goods recognition processing unit, and as a result of comparison, in a case where either pieces of the goods identification information or the goods types are not identical to each other, the verification target extraction processing unit extracts as the verification target.

4. The information processing system according to claim 1, further comprising:
a product tag recognition processing unit configured to recognize product tag information from a product tag that appears in the image information; and
a correspondence relationship determination processing unit configured to determine a correspondence relationship between a goods type of the goods displayed and the product tag, wherein
in a case where the verification target extraction processing unit compares either goods identification information or a goods type that has been recognized in current processing by the displayed goods recognition processing unit with either goods identification information or a goods type that has been recognized in processing before the current processing by the displayed goods recognition processing unit, and as a result of comparison, either pieces of the goods identification information or the goods types are identical to each other, and
in a case where there is a change between a correspondence relationship between the goods type of the goods displayed and a product tag that has been determined in the current processing by the correspondence relationship determination processing unit and a correspondence relationship between the goods type of the goods displayed and a product tag that has been recognized in the processing before the current processing by the correspondence relationship determination processing unit, and there is a change between image information of a place area to be a processing target in the current processing and image information of a corresponding place area in the processing before the current processing,
the verification target extraction processing unit extracts as the verification target.

5. The information processing system according to claim 1, further comprising
a product tag recognition processing unit configured to recognize product tag information from a product tag that appears in the image information, wherein
in a case where the verification target extraction processing unit compares either goods identification information or a goods type that has been recognized in current processing by the displayed goods recognition processing unit with either goods identification information or a goods type that has been recognized in processing before the current processing by the displayed goods recognition processing unit, and as a result of comparison, either pieces of the goods identification information or the goods types are identical to each other, and
in a case where there is a change between a recognition result that has been recognized in the current processing by the product tag recognition processing unit and a recognition result that has been recognized in the processing before the current processing by the product tag recognition processing unit, and there is a change between image information of a place area to be a processing target in the current processing and image information of a corresponding place area before the current processing,
the verification target extraction processing unit
extracts as the verification target.

6. The information processing system according to claim 1, further comprising:
a product tag recognition processing unit configured to recognize product tag information from a product tag that appears in the image information; and
a correspondence relationship determination processing unit configured to determine a correspondence relationship between a goods type of the goods displayed and the product tag, wherein
in a case where the verification target extraction processing unit compares either goods identification information or a goods type that has been recognized in current processing by the displayed goods recognition processing unit with either goods identification information or a goods type that has been recognized in processing before the current processing by the displayed goods recognition processing unit, and as a result of comparison, either pieces of the goods identification information or the goods types are identical to each other, and
in a case where there are changes respectively between a recognition result that has been recognized in the current processing by the product tag recognition processing unit and a recognition result that has been recognized in the processing before the current processing by the product tag recognition processing unit, between a correspondence relationship between the goods type of the displayed goods and the product tag that has been determined in the current processing by the correspondence relationship determination processing unit and a correspondence relationship between the goods type of the displayed goods and the product tag that has been determined in the processing before the current processing by the correspondence relationship determination processing unit, and between image information of a place area in the current processing and image information of a corresponding place area before the current processing,
the verification target extraction processing unit
extracts as the verification target.

7. The information processing system according to one of claims 1 to 6, wherein
the verification target extraction processing unit
notifies the verification target by displaying a predetermined area in the image information and/or the recognition result in a highlighted manner.

8. An information processing program for causing a computer to function as:
a displayed goods recognition processing unit configured to recognize information indicating goods, the goods appearing in image information obtained by imaging a display shelf; and
a verification target extraction processing unit configured to extract a recognition result to be a verification target out of the goods displayed on the display shelf, wherein
the verification target extraction processing unit
extracts the verification target by using a change in the information indicating the goods displayed on the display shelf that has been recognized from the image information.
